# EUROPÄISCHE PATENTSCHRIFT

(11) **EP 2 110 271 B1**
(45) Veröffentlichungstag und Bekanntmachung des Hinweises auf die Patenterteilung: **24.08.2011**
(21) Anmeldenummer: 09003993.4
(22) Anmeldetag: 20.03.2009
(51) Int. Cl.: B60D 1/06, B60D 1/58, B60D 1/30

(54) **Anhängekupplung**
Trailer tow-bar
Attelage

(30) Priorität: 18.04.2008 DE 102008019713; 04.09.2008 DE 102008045695
(43) Veröffentlichungstag der Anmeldung: 21.10.2009
(60) Teilanmeldung: 11004136.5
(73) Patentinhaber: WESTFALIA - Automotive GmbH, 33378 Rheda-Wiedenbrück (DE)
(72) Erfinder: Baysoy, Michael, 33397 Rietberg (DE); Meierkord, Norbert, 33378 Rheda-Wiedenbrück (DE); Samp, Mario, 33378 Rheda-Wiedenbrück (DE)
(74) Vertreter: Bregenzer, Michael

(56) Entgegenhaltungen:
- DE-A1- 10 334 000
- US-B2- 6 956 468
- US-B2- 7 309 076

## Beschreibung

Die Erfindung betrifft eine Anhängekupplung für ein Zugfahrzeug, insbesondere ein Personen-Kraftfahrzeug, zum Anhängen eines Anhängers an das Zugfahrzeug, mit einer Kupplungskugel, die an einem freien Ende eines Kugelträgers angeordnet ist und auf die eine Kupplungsaufnahme einer Anhänger-Kupplung des Anhängers aufsetzbar ist, und mit einem Drehlager zur drehbaren Lagerung des Kugelkopfs bezüglich des Zugfahrzeugs gemäß dem Oberbegriff des Anspruchs 1.

Aus US 6,956,468 B2 sowie aus US 7,309,076 B2 geht jeweils eine Anhängekupplung dieser Art hervor.

Eine Anhängekupplung mit einem Drehlager zur drehbaren Lagerung des Kugelkopfs bezüglich des Zugfahrzeugs ist beispielsweise aus der DE 103 34 000 A1 bekannt. Der Kugelkopf ist an einem Kugelträger drehbar gelagert, beispielsweise mittels eines Rollenlagers. Dadurch ist ein Schwenken des Anhängers um eine Hochachse möglich.

Das Drehlager, das beispielsweise ein Gleitlager oder Wälzlager ist, ist in einem Innenraum des Kugelkopfs angeordnet und befindet sich zwischen dem Kugelkopf und dem oberen Ende des Kupplungsschaftes, der somit die Funktion eines Kugelträgers hat. Zudem ist im Innenraum des Kugelkopfes noch eine Sensoreinrichtung zur Drehwinkelerfassung des Kugelkopfes bezüglich des Kraftfahrzeuges vorhanden.

Das bekannte Lagerkonzept hat unter anderem den Nachteil, dass auf den Kugelkopf bezüglich der Fahrzeughochachse wirkende Stützkräfte oder auch Zugkräfte des Anhängers, beispielsweise beim Überfahren einer Kuppe, direkt auf das Wälzlager im Innenraum des Kugelkopfs wirken.

Es ist daher die Aufgabe der vorliegenden Erfindung, ein verbessertes Lagerkonzept für eine Anhängekupplung der eingangs genannten Art zu stellen.

Zur Lösung der Aufgabe ist eine Anhängekupplung gemäß der technischen Lehre des Anspruchs 1 vorgesehen.

Es ist ein Radial-Wälzlager zwischen dem Kugelkopf und dem Kupplungsarm-Lagerabschnitt vorgesehen und/oder in einem Innenraum des Kugelkopfs ist mindestens ein Wälzlager, beispielsweise ein Radial-Wälzlager und/oder ein Axial-Wälzlager, angeordnet.

Die Kupplungskugel ist mit dem Kugelträger fest verbunden oder einstückig. Der Kugelträger wiederum ist mittels des Drehlagers an einem mit dem Zugfahrzeug fest verbindbaren oder verbundenen Kupplungsarm um eine Hochachse des Zugfahrzeugs drehbar gelagert. Diese Ausführungsform ließe sich im Prinzip auch ohne eine Bremseinrichtung realisieren. Im Unterschied zu der Drehlagerung gemäß DE 103 34 000 A1 ist das Drehlager abseits der Kupplungskugel, nämlich zwischen Kupplungsarm und Kugelträger, so dass die Ausgestaltung des Drehlagers optimiert werden kann. Insbesondere ist eine Abdichtung des Drehlagers gegen Umwelteinflüsse leichter realisierbar, wenn nicht der verhältnismäßig knapp bemessene, schwer zugängliche Einbauraum unter der Kupplungskugel für Dichtmaßnahmen zur Verfügung steht.

Der Kugelträger und der Kugelkopf sind beispielsweise mittels einer Schweißverbindung, einer Klebeverbindung oder einer Schraubverbindung miteinander verbunden, wobei Kombinationen ohne weiteres möglich sind. Wenn der Kugelträger und der Kugelkopf zunächst voneinander getrennte Bauteile sind, ist beispielsweise eine leichtere Fertigung der beiden Bauteile und/oder eine effizientere Montagetechnik möglich.

Die Drehlagerung erfolgt bei der erfindungsgemäßen Anhängekupplung vorzugsweise um eine Hochachse. Die Drehachse könnte z.B. aber auch schräg zur Hochachse stehen.

Der Kupplungsarm-Lagerabschnitt weist beispielsweise eine Lageraufnahme oder einen Lagervorsprung für die Kugelträgerwelle auf oder bildet einen Lagervorsprung oder eine Lageraufnahme.

Der Kupplungsarm-Lagerabschnitt ist zweckmäßigerweise als eine die Kugelträgerwelle aufnehmende Hohlwelle ausgestaltet. Mithin hat der Kupplungsarm also einen Hohlwellenabschnitt, in dem die Kugelträgerdrehwelle aufgenommen ist. Eine alternative Ausführungsform kann vorsehen, dass die Kugelträgerdrehwelle als eine Hohlwelle ausgestaltet ist, die auf einen entsprechenden Lagervorsprung des Kupplungsarm-Lagerabschnitts aufgesetzt ist.

Es versteht sich, dass der Kupplungsarm-Lagerabschnitt und die Kugelträgerdrehwelle unmittelbar mit z.B. einer Gleitlagerung aneinander gelagert sein können. Alternativ ist es auch möglich, dass zwischen den beiden Bauteilen ein Wälzlager, beispielsweise ein Nadellager, Kugellager oder dergleichen, angeordnet ist.

Eine besonders bevorzugte Ausführungsform sieht vor, dass die Kugelträgerdrehwelle eine langgestreckte Form aufweist, so dass eine optimale Einleitung von quer zur Drehachse wirkenden Kräften auf den Kupplungsarm möglich ist. Die Länge eines vor den Kugelkopf vorstehenden Drehwellenabschnitts der Kugelträgerdrehwelle entspricht zweckmäßigerweise zumindest einem Durchmesser des Kugelkopfs, ist aber vorzugsweise größer, beispielsweise 1,5 bis 2-fach größer als der Durchmesser des Kugelkopfs oder gar noch größer. Somit hat das Kugelkopfstück ein verhältnismäßig langes Axiallager bezüglich des Kupplungsarmes.

Entlang der Drehachse des Drehlagers können Axialkräfte auftreten, beispielsweise durch eine auf der Kupplungskugel auflastende Anhängelast. Darüber hinaus können aber auch Zugkräfte auftreten, beispielsweise beim Überfahren von Kuppen oder Durchfahren von Senken oder dergleichen. Daher weist die Anhängekupplung zweckmäßigerweise mindestens einen gegen ein Verschieben entlang der Drehachse wirksamen Axialanschlag auf, beispielsweise am Kugelkopfstück, insbesondere am Kugelträger. Es versteht sich, dass auch der Kupplungskopf einen solchen Axialanschlag aufweisen kann.

Der mindestens eine Axialanschlag ist vorzugsweise als ein Bestandteil eines Axiallagers ausgestaltet oder weist ein Axiallager auf. Das Axiallager ist z.B. ein Gleitlager oder Wälzlager.

Der mindestens eine Axialanschlag ist vorzugsweise an einem Flanschvorsprung des Kugelträgers vorgesehen. Es versteht sich, dass als Axialanschläge auch beispielsweise eine Ringnut oder ein Ringvorsprung an der Kugelträgerdrehwelle vorgesehen sein können.

Der Kupplungsarm-Lagerabschnitt steht zweckmäßigerweise in einen Innenraum des Kugelkopfs vor. Somit sind auch dort, das heißt im Innenraum des Kugelkopfs, später noch beschriebene Anordnungen von Axiallagern und/oder Radiallagern ohne weiteres möglich.

Vorteilhaft ist der Kupplungsarm-Lagerabschnitt zwischen Axialanschlägen des Kugelkopfstücks angeordnet. Von diesem kann einer beispielsweise durch den vorgenannten Flanschvorsprung, der andere durch das Kugelkopfstück, insbesondere eine Innenwandung desselben gebildet sein.

Zweckmäßigerweise ist dem mindestens einen Axialanschlag ein um die Drehachse drehbares Axial-Wälzlager zur Aufnahme von entlang der Drehachse auf den Kugelkopf wirkenden Kräften zugeordnet. Es versteht sich, dass bei mehreren Axialanschlägen vorzugsweise allen Axialanschlägen, ein solches Axial-Wälzlager zugeordnet ist. Gegenüber eine Gleitlagerung wird dadurch die Drehbarkeit des Kugelkopfstücks bezüglich des Kupplungsarms verbessert. Das Axial-Wälzlager ist zweckmäßigerweise zwischen dem Axialanschlag und dem Kupplungsarm-Lagerabschnitt angeordnet. Wenn man das Axial-Wälzlager als einen Bestandteil des Kugelkopfstücks bezeichnen wollte, würde es beispielsweise den Axialanschlag bilden. Das Axial-Wälzlager nimmt zweckmäßigerweise Zugkräfte oder Druckkräfte auf, je nach dem welchem Axialanschlag es zugeordnet ist. Beispielsweise nimmt das Axial-Wälzlager eine auf dem Kugelkopf auflastende Stützlast auf.

Es versteht sich, dass alternativ zu den obengenannten Radial- und/oder Axial-Wälzlagern auch eine Gleitlagerung möglich ist.

Bei dem Begriff "Wälzlager" sind selbstverständlich alle Typen von Wälzlagern umfasst, beispielsweise Kugellager, Rollenlager, Tonnenlager, Nadellager oder dergleichen.

Weiterhin ist es vorteilhaft, wenn mindestens eine Dichtung zwischen dem Kupplungsarm-Lagerabschnitt und einem Bestandteil des Kugelkopfstücks, beispielsweise der Kugelträgerdrehwelle oder dem Kugelkopf, vorgesehen ist. Insgesamt ist es vorteilhaft, wenn eine Dichtungsanordnung sämtliche beweglichen Bestandteile der erfindungsgemäßen Anhängekupplung gegen Umwelteinflüsse abdichtet.

Die Anhängekupplung hat vorteilhaft mindestens eine gegen ein Axialspiel und/oder ein Radialspiel des Kugelkopfstücks bezüglich des Kupplungsarm-Lagerabschnitts des Kupplungsarms wirkende Federanordnung. Die Federanordnung kann beispielsweise eine Tellerfeder oder mehrere Tellerfedern umfassen. Das erfindungsgemäße Lagerkonzept kann z.B. ein gewisses Spiel einerseits dem Kupplungsarm-Lagerabschnitt und andererseits dem Kugelkopf stück vorsehen, z.B. in Richtung der Drehachse. Ferner kann ein solches Spiel beim Fahrbetrieb, insbesondere durch Abnutzung, entstehen. Dem Spiel wirkt die Federanordnung entgegen. Beispielsweise ist die Federanordnung zwischen dem mindestens einen Axialanschlag und dem Kupplungsarm-Lagerabschnitt angeordnet. Es ist auch möglich, die Federanordnung zwischen beispielsweise dem oben genannten Axial-Lager und dem Axialanschlag oder dem Kupplungsarm-Lagerabschnitt anzuordnen. Selbstverständlich können auch mehrere Federanordnungen vorgesehen sein.

Vorteilhaft weist die Anhängekupplung eine Bremseinrichtung zum Bremsen einer Drehung des Kugelkopfs bezüglich des Zugfahrzeugs auf. Der Kugelkopf kann zwar drehen, die Bremseinrichtung bremst jedoch die Drehung. In manchen Fahrsituationen blockiert die Bremseinrichtung vorzugsweise sogar. Dadurch ist es möglich, das Gespann auch bei höheren Geschwindigkeiten zu stabilisieren. Das Drehlager ermöglicht zweckmäßigerweise einen Drehfreiheitsgrad bezüglich einer Hochachse, wobei auch ein Drehfreiheitsgrad bezüglich einer horizontal verlaufenden Achse vorteilhaft mittels der Bremseinrichtung bremsbar ist.

Ein an sich bei jeder Anhängekupplung mit einem drehbaren Kugelkopf sinnvolle Maßnahme, die auch bei der erfindungsgemäßen Anhängekupplung vorteilhaft ist, wenn die jeweilige Anhängekupplung eine Blockiereinrichtung zum Blockieren einer Drehung des Kugelkopfs bezüglich des Zugfahrzeugs aufweist. Dies ist insbesondere dann vorteilhaft, wenn die Anhängekupplung beispielsweise zum Tragen eines Heckträgers, insbesondere eines Fahrradträgers, verwendet werden soll. Die Blockierung kann beispielsweise durch ein entsprechendes Riegelelement realisiert sein. Es ist aber auch möglich, dass die oben erläuterte Bremseinrichtung zum Blockieren des Kugelkopfs bezüglich des Kupplungsarmes ausgestaltet ist, das heißt zu einem vollständigen, keine Bewegung des Kupplungsarms zulassenden Bremsung.

Eine weitere vorteilhafte Ausgestaltung der Erfindung sieht vor, dass die Anhängekupplung eine Sensoreinrichtung zur Erfassung einer Drehwinkellage des Anhängers bezüglich des Zugfahrzeugs aufweist, wobei die Sensoreinrichtung einen fahrzeugfest angeordneten Drehwinkelsensor, vorzugsweise einen magnetischen Sensor und/oder optischen Sensor, zur Zusammenwirkung mit einem Drehwinkelgeber, z.B. einem Permanentmagneten, einer optischen Markierung oder dergleichen, umfasst, der bezüglich des Kugelkopf drehfest ist. Es ist auch möglich, dass der Drehwinkelgeber fahrzeugfest ist und der Drehwinkelsensor eine Drehung des Kugelkopfs mitmacht. Die Sensoreinrichtung kann selbstverständlich auch mehrere Drehwinkelsensoren umfassen.

Der Drehwinkelgeber ist zweckmäßigerweise an dem Kugelträger oder dem Kugelkopf angeordnet. Es versteht sich, dass auch mehrere Drehwinkelgeber vorgesehen sein können. Der oder die Drehwinkelgeber können auch am Anhänger, vorzugsweise an der Anhänger-Kupplung angeordnet sein. Beispielsweise ist es möglich, einen oder mehrere Permanentmagnete an einer Kupplungspfanne der Anhänger-Kupplung anzubringen.

Der Drehwinkelsensor umfasst zweckmäßigerweise mindestens einen Magnetsensor, während der Drehwinkelgeber mindestens einen Permanentmagneten umfasst. Vorzugsweise ist der mindestens eine Drehwinkelsensor ein magnetoresistiver Sensor; z.B. ein ANIR oder GMR Sensor. Bevorzugt ist ein winkelabhängiger Sensor. Es können auch mehrere Sensoren vorgesehen sein, insbesondere um einen Drehwinkel an verschiedenen Stellen zu erfassen.

Der Drehwinkelsensor ist vorzugsweise an dem den Kugelkopf haltenden Kupplungsarm angeordnet. Der Kupplungsarm ist fahrzeugfest, während der Kugelkopf relativ zu diesem Drehlager drehbar ist.

Der Drehwinkelgeber ist vorzugsweise an dem Kugelträger oberhalb des Drehwinkelsensors angeordnet. Somit befindet sich der Drehwinkelsensor unterhalb des Kugelträgers. Der Kugelträger, z.B. die Kugelträgerdrehwelle, bildet vorteilhaft ein Übertragungsglied zur Übertragung einer Drehposition des Kugelkopfs Ein Magnetfeld des Drehwinkelgebers verläuft zweckmäßigerweise quer zur Hochachse, vorteilhaft horizontal, im Bereich des mindestens einen Drehwinkelsensors.

Vorteilhaft ist es, den Drehwinkelgeber an oder in einem vorzugsweise nicht magnetischen Bereich des Kugelträgers oder des Kupplungskugel anzuordnen, z.B. in Aluminium oder Kunststoff. Selbstverständlich ist es auch bei dem Drehwinkelsensor vorteilhaft, diesen in einem nicht magnetischen Bereich anzuordnen. Es hat sich aber in der Praxis gezeigt, dass durch entsprechende Kalibrierung auch eine Unterbringung in magnetischen Material möglich ist.

Der Drehwinkelgeber und/oder der Drehwinkelsensor sind vorzugsweise gegen Umwelteinflüsse geschützt. In der Praxis ist beispielsweise ein Gehäuse, ein Eingießen der betreffenden Bauteile oder dergleichen vorteilhaft. Es können auch Schutzaufnahmen für den Drehwinkelgeber oder den Drehwinkelsensor beispielsweise am Kugelträger, Kupplungsarm oder Kugelkopf vorgesehen sein, in denen das jeweilige Bauteil geschützt unterbringbar ist. Das vorgenannte Gehäuse hat z.B. zwei zueinander relativ drehbewegliche Gehäuseteile, von denen eines fahrzeugfest und das andere drehfest mit dem Kugelkopf oder dem Kugelträger verbunden ist. Zwischen den beiden Gehäuseteilen ist zweckmäßigerweise eine Dichtung, vorteilhaft z.B. eine Labyrinthdichtung vorgesehen.

Die Sensoreinrichtung hat vorzugsweise eine Kommunikationsschnittstelle für ein Kommunikationsnetz des Zugfahrzeugs, beispielsweise ein Bus-Schnittstelle. Somit kann die Sensoreinrichtung auf dem Kommunikationsnetz, beispielsweise einem CAN-Bus, einem FlexRay-Bus oder dergleichen, Drehwinkelinformationen versenden, die sie anhand des Drehwinkelgebers erfasst.

Ein weiterer, an sich bei jeder Sensoreinrichtung für eine Anhängekupplung, die einen Drehwinkel erfassen kann, sinnvolle Maßnahme ist, dass die Sensoreinrichtung zur Ermittlung einer Basiswinkellage des Kugelkopfs oder der Anhänger-Kupplung relativ zum Kupplungsarm, d.h. relativ zum Zugfahrzeug, Fahrinformationen über einen Fahrzustand des Zugfahrzeugs auf dem Kommunikationsnetz empfängt und auswertet. Dieser Fahrzustand ist zweckmäßigerweise eine Information über eine Fahrtrichtung. Beispielsweise enthält die Fahrinformation über den Fahrzustand Drehzahlinformationen von Drehzahlgebern des Zugfahrzeugs, so dass die Sensoreinrichtung anhand dieser Drehzahlinformationen eine Geradeausfahrt, eine Kurvenfahrt, eine Vorwärtsfahrt oder eine Rückwärtsfahrt ermitteln kann.

So ist es beispielsweise möglich, dass die Sensoreinrichtung bei einer Geradeaus-Vorwärtsfahrt ein jeweiliges Drehwinkelsignal des Drehwinkelsensors als eine Basiswinkelinformation ermittelt.

Die erfindungsgemäße Anhängekupplung ist vorzugsweise zur Ermittlung einer Geradeaus-Stellung des Kupplungskopfs bzw. des daran angekoppelten Anhängers bezüglich des Zugfahrzeugs ausgestaltet.

Es versteht sich, dass die Fahrinformationen auch sozusagen aufbereitete Fahrinformationen sein können, beispielsweise von einer elektronischen Fahrstabilisierung, von einem Antiblockiersystem oder dergleichen, aufbereitete Fahrinformationen. Auch Fahrinformationen eines an das Kommunikationsnetz angeschlossenen Drehwinkelsensors können von der Sensoreinrichtung ausgewertet werden.

Die Sensoreinrichtung ist zweckmäßigerweise zu einer Kommunikation mit einer elektronischen Fahrstabilisierungseinrichtung des Zugfahrzeugs ausgestaltet. Dazu hat die Sensoreinrichtung beispielsweise einen entsprechenden Kommunikationscontroller. Somit kann die Sensoreinrichtung beispielsweise Fahrinformationen über den Fahrzustand des Zugsfahrzeugs von dieser Fahrstabilisierungseinrichtung erhalten und umgekehrt die Drehwinkelinformationen an die Fahrstabilisierungseinrichtung senden.

Auch eine Kommunikation mit einer Einparkhilfeeinrichtung oder einem Einparksystem zum Einparken des Zugfahrzeugs mit oder ohne angehängtem Anhänger ist vorteilhaft. So kann die erfindungsgemäße Anhängekupplung bei dieser Ausgestaltung der Erfindung über ihre Kommunikationsschnittstelle einem derartigen Einparkhilfesystem Winkelinformationen über den Kupplungskopf und somit den daran angehängten Anhänger übermitteln, so dass das Einparkhilfesystem das Zugfahrzeug mit angehängtem Anhänger in eine Parklücke oder Parkbucht einparken kann. Es versteht sich, dass hier ein halbautomatisches oder vollautomatisches Einparken ohne weiteres möglich ist.

Bei der Bremseinrichtung sind verschiedenartige mechanische Ausgestaltungen möglich. Beispielsweise enthält die Bremseinrichtung eine Reibbremse, eine piezo-elektrische Bremseinrichtung oder dergleichen.

Vorzugsweise wirkt die Bremseinrichtung auf den Kugelkopf oder den Kügelträger. Es ist aber auch möglich, dass die Bremseinrichtung auf das Drehlager wirkt, beispielsweise einen Druck auf das Drehlager auswirkt, so dass das Drehlager leichter oder schwerer dreht.

Eine Bremskraft der Bremseinrichtung ist vorzugsweise einstellbar. Dazu hat die Bremseinrichtung vorzugsweise einen Stelleingang. Beispielsweise hat die Bremseinrichtung einen elektrischen Stellantrieb, z.B. einen elektromagnetischen Antrieb, zum Einstellen der Bremskraft. Vorzugsweise ist eine Steuereinrichtung zu einer Veränderung der Bremskraft der Bremseinrichtung in Abhängigkeit von einem oder mehreren der nachfolgenden Parameter vorgesehen:
- Fahrtrichtung
- Fahrgeschwindigkeit
- Drehwinkelgeschwindigkeit eines Drehwinkels des Anhängers relativ zu dem Zugfahrzeug.

Somit kann die Steuereinrichtung beispielsweise bei langsamer Fahrt oder Rückwärtsfahrt eine kleine Bremskraft einstellen, was die Beweglichkeit des Gespanns verbessert, während bei schneller Fahrt, insbesondere schneller Vorwärtsfahrt, eine hohe Bremskraft zweckmäßig ist. Selbstverständlich ist es möglich, dass die Steuereinrichtung eine Regelung zur Regelung der Bremskraft aufweisen kann.

Die Steuereinrichtung für die Bremseinrichtung hat zweckmäßigerweise eine Kommunikationsschnittstelle für ein Kommunikationsnetz des Zugfahrzeugs, beispielsweise einen CAN-Bus, FlexRay-Bus oder vorzugsweise einen sonstigen Fahrzeug-Bus.

Die Steuereinrichtung bildet zweckmäßigerweise einen Bestandteil der vorgenannten Sensoreinrichtung. Es ist auch möglich, dass die Steuereinrichtung einen Bestandteil der Bremseinrichtung bildet. Weiterhin ist es vorteilhaft, dass die Sensoreinrichtung oder die Bremseinrichtung die Steuereinrichtung umfassen. Jedenfalls ist es vorteilhaft, wenn die Bremseinrichtung und die Steuereinrichtung, die Sensoreinrichtung und die Steuereinrichtung, oder alle vorgenannten Einrichtungen jeweils durch ein einziges Bauteil integriert gebildet sind. So können beispielsweise die Sensoreinrichtung und die Bremseinrichtung eine Baueinheit bilden, z.B. durch einen integrierten elektronischen Baustein gebildet sein. Der Baustein ist beispielsweise ein ASIC (= Application Specific Integrated Circuit).

An dem Kugelkopf und dem Kugelträger ist zweckmäßigerweise mindestens eine Formschlusskontur zu einer horizontal drehfesten Zusammenwirkung mit einer Gegen-Formschlusskontur der Anhänger-Kupplung angeordnet. Somit ist es möglich, eine Drehbewegung des Anhängers auf den Kugelkopf oder den Kugelträger zu übertragen. Dies ist im Hinblick auf die erfindungsgemäße Bremseinrichtung vorteilhaft, die so eine optimale Bremswirkung letztlich auf den Anhänger bewirken kann. Aber auch bei der Sensoreinrichtung, selbst wenn keine Bremseinrichtung vorhanden ist, ist es vorteilhaft, eine formschlüssige Drehmitnahme zwischen einerseits dem Kugelkopf und andererseits dem Anhänger zu schaffen. Somit ist nämlich eine definierte Lage des Drehwinkelgebers, der mit dem Anhänger dreht und dem fahrzeugfesten Drehwinkelsensor möglich. Es verseht sich, dass anstelle des Formschlusses auch ein Reibschluss möglich ist.

Die Formschlusskontur umfasst zweckmäßigerweise mindestens eine Aufnahme, z.B. eine Nut, in die ein Vorsprung der Anhänger-Kupplung eingreifen kann. Somit ist es möglich, auch konventionelle Anhänger-Kupplungen zu verwenden, die keinen Vorsprung haben. Die Formschlusskontur-Aufnahme ist dann nicht im Weg.

Zur Erleichterung eines Einführens der Gegen-Formschlusskontur in die zugfahrzeugseitige Formschlusskontur ist es vorteilhaft, wenn mindestens einen Einführschräge zum Einführen der Gegen-Formschlusskontur vorgesehen ist. Zweckmäßigerweise ist die Einführschräge und/oder ein erweiterter Bereich der Formschlusskontur so bemessen, dass ein Drehspiel von 10° bis 20°, vorzugsweise etwa 15° des Anhängers bezüglich der Kupplung bzw. des Kugelkopfes möglich ist. Das Einführen wird dadurch besonders einfach. Der erweiterte Bereich der Formschlusskontur ist zweckmäßigerweise an einer Oberseite des Kugelkopfes angeordnet, was das Einführen erleichtert.

Die mindestens eine Formschlusskontur lässt vorzugsweise eine Drehbewegung des Anhängers bezüglich des Kugelkopf bezüglich einer Horizontalebene zu, während bezüglich einer Drehung um eine Hochachse eine Drehfestigkeit gegeben ist. Somit ist beispielsweise beim Überfahren einer Kuppe oder Senke ein Drehspiel möglich, während die erfindungsgemäße Formschluss-Drehmitnahme bei einer Kurvenfahrt wirksam ist. Die mindestens eine Formschlusskontur ist zweckmäßigerweise an einer vertikalen Seitenfläche des Kugelkopfes angeordnet. Die Formschlusskontur hat zweckmäßigerweise einen im Wesentlichen vertikalen Verlauf. Beispielsweise erstreckt sich die Formschlusskontur von einer freien Oberseite des Kugelkopfs zur Unterseite des Kugelkopfs.

Vorzugsweise sind mehrere Formschlusskonturen am Kugelkopf vorgesehen, die zueinander bezüglich der Fahrzeug-Hochachse drehwinkelversetzt sind. Besonders vorteilhaft ist es, an einander entgesetzten Vertikalseiten des Kugelkopf Formschlusskonturen vorzusehen. Somit ist es beispielsweise möglich, die Gegen-Formschlusskontur wahlweise in die eine oder andere Formschlusskontur einzuführen. Es versteht sich, dass auch mehrere Gegen-Formschlusskonturen an der Anhänger-Kupplung vorgesehen sein können. Auch dann ist es vorteilhaft, wenn am Kugelkopf mehrere Formschlusskonturen für diese Gegen-Formschlusskonturen vorgesehen sind.

Der Kupplungsarm besteht vorzugsweise aus einem gebogenen Flachmaterial.

Nachfolgend wird ein Ausführungsbeispiel der Erfindung anhand der Zeichnungen 5 und 6 erläutert. Die Beispiele der Figuren 1-4 sind kein Teil der Erfindung.
- Figur 1: eine Draufsicht auf ein erstens Ausführungsbeispiel eines Anhän- gekupplungssystems mit einem schematisch darge- stellten Zugfahrzeug,
- Figur 2: eine Schnittdarstellung des Anhängekupplungssystems gemäß Figur 1 etwa entlang einer Linie A-A in Figur 1,
- Figur 3: eine Draufsicht auf eine Anhängekupplung des Anhän- gekupplungssystems gemäß Figur 1,
- Figur 4: ein zweites Ausführungsbeispiel einer Anhängekupplung im seitlichen Querschnitt,
- Figur 5: eine Seitenansicht einer dritten Ausführungsbei- spiels einer erfindungsgemäßen Anhängekupplung und
- Figur 6: eine Querschnittsansicht der Anhängekupplung gemäß Figur 5 etwa entlang einer Schnittlinie B-B in Fi- gur 5.

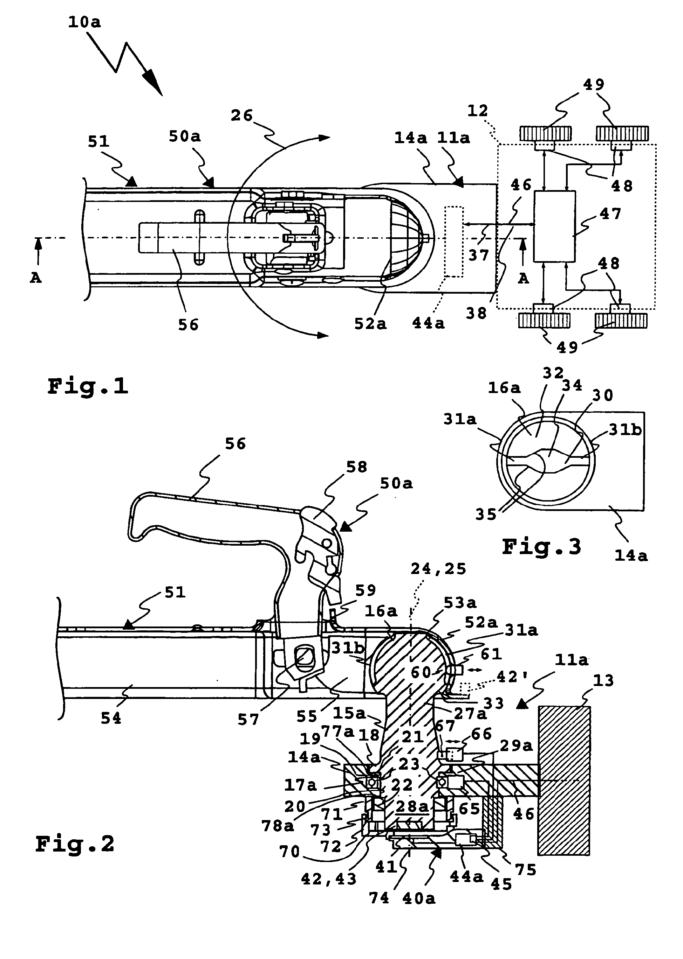

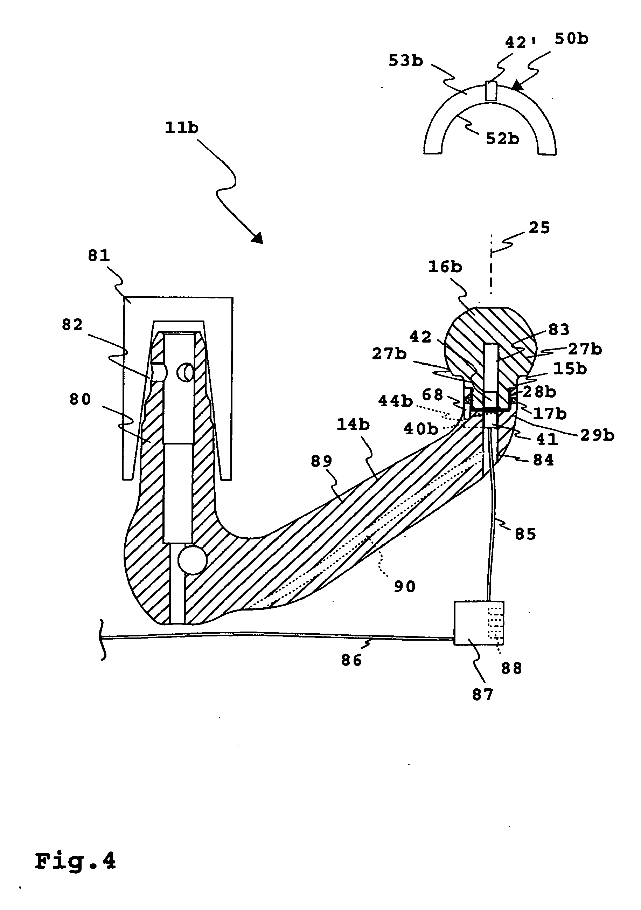

Bei einem Anhängekupplungssystem 10a gemäß Figuren 1, 2 und 3 ist eine Anhängekupplung 11a an einem Zugfahrzeug 12 angeordnet, beispielsweise an einem Querträger 13, der sich im Heckbereich einer schematisch dargestellten Karosserie des Zugfahrzeugs 12 erstreckt. Der Querträger 13 trägt einen Kupplungsarm 14a. Der Kupplungsarm 14a ist vorliegend fest mit dem Querträger 13 verbunden. Es wäre prinzipiell auch möglich, einen Kupplungsarm 14a einer erfindungsgemäßen Anhängekupplung 11a lösbar, beispielsweise steckbar, auszugestalten, was später im Zusammenhang mit Figur 4 noch erläutert wird.

Auch eine bewegliche Lagerung, insbesondere eine schwenkbewegliche und/oder schiebebewegliche Lagerung, des Kupplungsarms bezüglich des jeweiligen Zugfahrzeugs ist bei einer erfindungsgemäßen Anhängekupplung möglich.

An dem Kupplungsarm 14a ist ein Kugelträger 15a, an dessen oberem, freien Ende ein Kugelkopf 16a angeordnet ist, mittels eines Drehlagers 17a um eine Drehachse 24 drehbar gelagert. Der Kugelträger 15a und der Kugelkopf 16a sind vorzugsweise einstückig, beispielsweise als ein Gussteil, Schmiedeteil oder dergleichen, ausgeführt. Jedenfalls ist eine feste Verbindung zwischen Kugelkopf 16a und Kugelträger 15a vorhanden. Der Kugelträger 15a und der Kugelkopf 16a bilden ein Kugelkopfstück 27a.

Das Drehlager 17a umfasst einen Stützflansch 18 am Kugelträger 15a, der in einer Ausnehmung 19 an der Oberseite des Kupplungsarms 14a drehbar aufgenommen ist. Der Stützflansch 18 steht vor einem zylindrischen Lagerabschnitt 20 des Kugelträgers 15a nach radial außen vor und stützt sich in der Ausnehmung 19, die einen größeren Durchmesser als eine den Lagerabschnitt 20 des Kugelträgers 15a aufnehmende Drehaufnahme 21 hat, ab. Somit kann die Ausnehmung 19 Vertikalkräfte ohne Weiteres aufnehmen, während der Lagerabschnitt 20 im Wesentlichen horizontale Kräfte aufnimmt.

Der Kugelträger 15a ist mit einer Sicherungsmutter 22, die sich an der Unterseite des Kupplungsarms 14a abstützt, unverlierbar am Kupplungsarm 14a befestigt. Die Sicherungsmutter 22 ist auf einen Schraubabschnitt unterhalb des Lagerabschnitts 20 des Kugelträgers 15a aufgeschraubt.

Die Lagereigenschaften des Drehlagers 17a können selbstverständlich durch Kugellager, Wälzlager, Rollenlager, Gleitlager oder dergleichen verbessert sein. Beispielhaft ist ein Kugellager 23 eingezeichnet.

Der Kugelträger 15a ist im Bereich seines Lagerabschnitts 20 als eine Kugelträgerdrehwelle 28a ausgestaltet. Der Kupplungsarm 14a weist zur Aufnahme der Kugelträgerdrehwelle 28a bzw. des Lagerabschnitts 20 einen Kugelarm-Lagerabschnitt 29a auf.

Der Stützflansch 18 bildet mit seiner dem Kupplungsarm-Lagerabschnitt 29a zugewandten Unterseite einen Axialanschlag 77a, die Oberseite der Sicherungsmutter 22, die fest mit dem Kugelkopfstück 27a verbunden ist, bildet mit ihrer Oberseite einen Axialanschlag 78a. Die Axialanschläge 77a, 78a verhindern ein Verschieben oder Verstellen des Kugelträgers 15a entlang der Drehachse 24. Mithin nehmen also die beiden Axialanschläge 77a, 78a Stützkräfte und Zugkräfte, die auf den Kugelkopf 16a wirken, auf. Es versteht sich, dass im Bereich der Axialanschläge 77a, 78a an Stelle der in der Zeichnung vorgeschlagenen Gleitlagerung auch Wälzlager, z.B. Kugellager oder dergleichen, vorgesehen sein könnten.

An die Anhängekupplung 11a ist eine Anhänger-Kupplung 50a eines Anhängers 51 ankuppelbar. Der Kugelkopf 16a ist dann in einer Kugelaufnahme 52a eines Gehäuses 53a der Anhänger-Kupplung 50a aufgenommen. Die Anhänger-Kupplung 50a ist beispielsweise am vorderen, freien Ende einer Deichsel 54 des Anhängers 51 angeordnet. Eine Klemmbacke 55, die mit Hilfe eines Betätigungshebels 56 zwischen einer in Figur 2 dargestellten Schließstellung, bei der der Kugelkopf 16a durch die Klemmbacke 55 in der Kugelaufnahme 52a gehalten wird, und einer nach unten um eine Achse 57 geschwenkten Freigabestellung schwenkbar. Dies ist an sich bekannt. Eine Sicherungsklinke 58, die mit einem Anschlag 59 am Gehäuse 53a zusammenwirkt, sichert den Betätigungshebel 56 ist der Schließstellung, so dass sich die Anhänger-Kupplung 50a nicht unbeabsichtigt vom Kugelkopf 16a lösen kann.

Der Kugelträger 15a und somit der mit diesem fest verbundene Kugelkopf 16a ist anhand des Drehlagers 17a um eine Hochachse 25 bezüglich des Kupplungsarms 14a und somit bezüglich des Zugfahrzeugs 12 drehbar, was durch einen Pfeil 26 angedeutet ist. Diese Drehbarkeit ist insbesondere beim Rangieren, z.B. beim Rückwärtsfahren, des Gespanns bestehend aus Zugfahrzeug 12 und Anhänger 51 vorteilhaft.

Eine vorteilhafte Maßnahme sieht vor, dass der Anhänger 51 bezüglich des Kugelkopfes 16a drehfest ist. Dazu sind am Kugelkopf 16a Formschlusskonturen 30 vorgesehen, die mit Gegen-Formschlusskonturen 60 der Anhänger-Kupplung 50a zusammenwirken. Die Gegen-Formschlusskontur 60 ist an der Vorderseite eines Stifts 61 vorgesehen, der in den Innenraum der Kugelaufnahme 52a vorsteht. Der Stift 61 ist bezüglich des Gehäuses 53a beweglich gelagert, beispielsweise in Richtung eines in Figur 2 eingezeichneten Doppelpfeils. Dadurch ist es möglich, die Anhänger-Kupplung 50a auch an konventionellen, nicht erfindungsgemäßen Anhängekupplungen anzukuppeln. Jedenfalls greift der Stift 61 in die Formschlusskontur 30 ein und bewirkt eine Drehmitnahme. Eine erfindungsgemäße Gegen-Formschlusskontur, beispielsweise die Gegen-Formschlusskontur 60, erstreckt sich zweckmäßigerweise in Längsrichtung eines jeweiligen Anhängers, beispielsweise des Anhängers 51. Der Stift 61 ist beispielsweise an einer freien Stirnseite des Gehäuses 53a angeordnet.

Die Formschlusskonturen 30 umfassen Nuten 31a, 31b, deren Innenbreite mit der Außenbreite des Stifts 61 bzw. des vorderen Endes des Stifts 61 korrespondiert. Die beiden Nuten 31a, 31b erstrecken sich von einer Oberseite 32 des Kugelkopfs 16a nach unten zu dessen Unterseite. Vorzugsweise verbleibt jedoch am unteren Randbereich des Kugelkopfs 16a ein bundartiger Rand 33, was den Halt in der Kugelaufnahme 52a verbessert. An der Oberseite 32 des Kugelkopf 16a ist ferner ein erweiteter Einführabschnitt 34 vorgesehen, der sich zwischen den beiden Nuten 31a, 31b erstreckt. Ein Einführen des Stifts 61 in diesen Einführabschnitt 34 ist dadurch erleichtert, dass dieser breiter als die beiden Nuten 31a, 31b ist. Durch den erweiterten Einführabschnitt 34 ist es möglich, dass der Anhänger 51 beispielsweise in einem Winkel von etwa 10° bis 20° schräg zu den beiden Nuten 31a, 31b auf den Kugelkopf 16a aufgesetzt wird. Die Gegen-Formschlusskontur 60 gleitet beim Aufsetzen der Kugelaufnahme 52a auf den Kugelkopf 16a an einer der Einführschrägen 35 entlang, die sich vom erweiterten Einführabschnitt 34 in Richtung der engeren Nuten 31a, 31b erstrecken.

Die beiden Nuten 31a, 31b erstrecken sich an einander entgegengesetzten Vertikalseitenflächen des Kugelkopfes 16a, so dass der Mitnehmer-Stift 61 sowohl in die eine als auch in die andere Nut 31a, 31b einführbar ist.

Die drehfeste Kupplung der Anhänger-Kupplung 50a mit dem Kugelkopf 16a ist vorteilhaft in Zusammenwirkung mit einer Sensoreinrichtung 40a, die einen Drehwinkelsensor 41 enthält.

Der Drehwinkelsensor 41 ist unterhalb eines Drehwinkelgebers 42 angeordnet, beispielsweise eines Permanentmagneten 43. Der Permanentmagnet 43 ist einer liegenden Position angeordnet, so dass sein Magnetfeld im Wesentlichen horizontal verläuft und den unter dem Permanentmagneten 43 liegenden Drehwinkelsensor 41, der in einer zur Hochachse 25 horizontalen Ebene winkelsensitiv ist, durchdringt.

Die Sensoreinrichtung 40a umfasst zur Auswertung von Messsignalen des Drehwinkelsensors 41 eine Auswerte- und Steuereinrichtung 44a. Die Steuereinrichtung 44a enthält eine Kommunikationsschnittstelle 45, beispielsweise einen CAN-Controller, zur Anbindung an ein Kommunikationsnetz 46 des Zugfahrzeugs 12. Somit kann die Steuereinrichtung 44a beispielsweise mit einer Fahrstabilisierungseinrichtung 47 des Zugfahrzeugs 12 und/oder mit Rädern 49 zugeordneten Drehzahlsensoren 48 des Zugfahrzeugs 12 kommunizieren. Beispielsweise überträgt die Steuereinrichtung 44a eine den Drehwinkel des Anhängers 51 bezüglich der Hochachse 25 enthaltendes Drehwinkelsignal 37 an die Fahrstabilisierungseinrichtung 47.

Im ungekehrter Richtung erhält die Steuereinrichtung 44a von der Fahrstabilisierungseinrichtung 47 oder den Drehzahlsensoren 48 Fahrinformationen 38 über einen Fahrzustand des Zugfahrzeugs 12, beispielsweise Geradeausfahrt oder Kurvenfahrt, um beispielsweise eine Basis-Drehwinkellage des Drehwinkelgebers 42 bezüglich des Drehwinkelsensors 41 zu ermitteln. An sich ist diese Maßnahme bei der erfindungsgemäßen Anhängekupplung 11a nicht notwendig, da durch die Formschlusskonturen 30 eine definierte Drehwinkellage des Drehwinkelgebers 42 bezüglich des Drehwinkelsensors 41 möglich ist.

Die Fahrinformationen 38 sind bei der Steuereinrichtung 44a auch zu einem anderen Zweck nutzbar, insbesondere im Zusammenhang mit den Drehwinkelsignalen 37:

Die Steuereinrichtung 44a steuert Bremseinrichtungen 65, 66 an, die eine Drehbewegung des Kugelkopfs 16a bzw. des Kugelträgers 15a um die Hochachse 25 bremsen können.

Die Bremseinrichtung 65 ist beispielsweise einepiezoelektrische Bremseinrichtung, die auf das Kugellager 23 oder eine sonstige Stelle des Drehlagers 17a wirkt. Die Bremseinrichtung 66 ist eine elektromechanische Bremseinrichtung mit einem beispielsweise zum Kugelträger 15a hin beweglichen und diesen bremsenden Bremsglied 67. Das Bremsglied 67 ist beispielsweise durch einen Elektromagneten, einen Elektromotor oder dergleichen zwischen einer vom Kugelträger 15a entfernten und einer an diesen angelegten Stellung verstellbar, was durch einen Doppelpfeil in Figur 2 angedeutet ist.

Die Steuereinrichtung 44a steuert eine jeweilige Bremskraft der Bremseinrichtungen 65, 66, beispielsweise in Abhängigkeit von dem Drehwinkelsignal 37 und/oder in Anhängigkeit von den Fahrinformationen 38. So steuert die Steuereinrichtung 44a beispielsweise eine höhere Bremskraft an, wenn die Drehzahlsensoren 48 eine Rückwärtsfahrt oder eine langsame Vorwärtsfahrt des Zugfahrzeugs 12 signalisieren.

Selbstverständlich ist es möglich, dass die Fahrstabilisierungseinrichtung 47 die Bremseinrichtungen 65, 66 auch direkt ansteuert, wofür diese, was nicht dargestellt ist, mit einer entsprechenden Kommunikationsschnittstelle für das Kommunikationsnetz 46 ausgerüstet sein sollten.

Es ist auch möglich, dass die Fahrstabilisierungseinrichtung 47 die Bremseinrichtungen 65, 66 über die Steuereinrichtung 44a zu einer Erhöhung oder Verringerung der jeweiligen Bremskraft ansteuert.

Der Drehwinkelgeber 42 ist oberhalb des Drehwinkelsensors 41 angeordnet. Der Drehwinkelgeber 42 ist an der unteren Stirnseite des Kugelträgers 15a angeordnet.

Der Drehwinkelgeber 42 und der Drehwinkelsensor 41 sind durch ein Schutzgehäuse 70 geschützt. Ein oberes Gehäuseteil 71 des Schutzgehäuses 70 ist an der Unterseite des Kupplungsarms 14 angeordnet. Mittels ineinander greifenden Dichtungsvorsprüngen oder Hakenvorsprüngen 73 ist ein unteres Gehäuseteil 72 mit dem oberen Gehäuseteil 71 dicht verbunden. Ein Gehäuseboden 74, der mit dem unteren Gehäuseteil 72 einstückig sein kann, vorliegend aber ein separates Bauteil bildet, trägt den Drehwinkelsensor 41. Der Gehäuseboden 74 ist mittels eines Trägers 75 am Kupplungsarm 14a befestigt. Jedenfalls ist es vorteilhaft, wenn die Bestandteile der Sensoreinrichtung 40a vor Umwelteinflüssen geschützt an der Anhängekupplung 11 angeordnet sind.

Es versteht sich, dass die Anhängekupplung 11a teilweise schematisch dargestellt ist. Insbesondere kann das Schutzgehäuse 70 anders, vorzugsweise einfacher aufgebaut sein.

Der Drehwinkelsensor 41 und der Drehwinkelgeber 42 bei der Anhängekupplung 11a sind nahe beieinander angeordnet, vorliegend unmittelbar einander gegenüberliegend.

Es versteht sich, dass bei dem erfindungsgemäßen Lagerkonzept für die Baueinheit von Kugelträger und Kugelkopf auch eine alternativ Anbringung zumindest für den Drehwinkelgeber, beispielsweise den Permanentmagneten möglich ist. So wäre es beispielsweise möglich, an der Anhänger-Kupplung 50a einen Drehwinkelgeber oder Permanentmagneten 42' anzuordnen, beispielsweise am Gehäuse 53a. Durch die erfindungsgemäße Formschluss-Drehmitnahme mittels der Formschlusskonturen 30, 60 dreht der Drehwinkelgeber 42' bei Kurvenfahrt des Gespanns aus Zugfahrzeug 12 und Anhänger 51 relativ zu dem Drehwinkelsensor 41, so dass dieser eine Drehwinkellage bezüglich der Hochachse 25 erfassen kann.

Eine Anhängekupplung 11b hat einen Kupplungsarm 14b mit einem Steckende 80, das in eine Steckaufnahme 82 einer fahrzeugfest am Zugfahrzeug 12 angeordneten, beispielsweise am Querträger 13 befestigten Halterung 81 einsteckbar ist und mittels nicht dargestellter Formschlusskonturen an der Steckaufnahme 82 verriegelbar ist. Somit ist der Kupplungsarm 14b von der Halterung 81 bei Nichtgebrauch entfernbar. Am oberen, freien Ende des Kupplungsarms 14b ist eine Drehlagerung 17b für einen Kugelträger 15b vorgesehen, an dem ein Kugelkopf 16b angeordnet ist. Der Kugelträger 15b bildet eine Kugelträgerdrehwelle 28b, die in einem Kupplungsarm-Lagerabschnitt 29b des Kupplungsarms 14b drehbar aufgenommen ist. Der Kugelkopf 16b ist drehbar bezüglich der Hochachse 25. Der Kugelkopf 16b steht nach oben vor den Kupplungsarm 14b vor. Der Kugelträger 15b und der Kugelkopf 16b bilden ein Kugelkopfstück 27b.

Im Kugelkopf 16b und am freien Ende des Kupplungsarms 14b sind Ausnehmungen 83, 84 vorgesehen, in denen ein Drehwinkelgeber 42 und ein Drehwinkelsensor 41 aufgenommen sind. Der Drehwinkelgeber 42 ist oberhalb des Drehwinkelsensors 41 angeordnet, so dass der Drehwinkelsensor 41 vom Magnetfeld des Drehwinkelgebers 42 durchdrungen ist. Der Drehwinkelsensor 41 bildet einen Bestandteil einer Sensoreinrichtung 40b, die eine Drehung des Kugelkopf 16b bezüglich des Kupplungsarms 14b um die Hochachse 25 ermittelt und an ein Bordnetz 86 des Zugfahrzeugs 12 meldet. Beispielsweise ist die Sensoreinrichtung 40b über eine Leitung 85, die zu einer Anhänge-Steckdose 87 zur Stromversorgung des in Figur 4 nicht dargestellten Anhängers verbunden, die ihrerseits an das Bordnetz 86 angeschlossen ist. Die Steckdose 87 enthält Steckkontakte zum Einstekken eines anhängerseitigen Steckers.

Dem Drehlager 17b ist eine Bremseinrichtung 68 zugeordnet, beispielsweise eine piezo-elektrische Bremseinrichtung, die eine Drehung des Kugelkopf 16b um die Hochachse 25 in Abhängigkeit von einem Stellsignal bremst.

Die Sensoreinrichtung 40b enthält die Bremseinrichtung 68 vorzugsweise integral. Somit bildet die Sensoreinrichtung 40b eine integrierte Steuereinrichtung 44b für die Bremseinrichtung 68. Abhängig beispielsweise von einer Drehwinkeländerungsgeschwindigkeit eines Drehwinkels, den der Drehwinkelsensor 41 erfasst, vergrößert oder verkleinert die Steuereinrichtung 44b die Bremskraft der Bremseinrichtung 68, wobei sie beispielsweise bei schnellen Drehwinkeländerungen eine höhere Bremskraft zur Gespannstabilisierung einstellt. Beim Rangieren treten zwar größere Drehwinkel auf, dies aber mit geringerer Drehwinkeländerungsgeschwindigkeit. Somit stellt die Steuereinrichtung 44b eine kleinere Bremskraft an der Bremseinrichtung 68 ein.

Die beiden Ausnehmungen 83, 84 fluchten miteinander. Die untere Ausnehmung 84 bildet einen Kanal, aus dem die Anschlussleitung 85 herausgeführt ist. Beim Ausführungsbeispiel verlaufen die beiden Ausnehmungen 83, 84 im Wesentlichen vertikal. Die Leitung 85 tritt unterhalb des Kugelkopfes 16b aus dem Kupplungsarm 14b nach unten aus.

Es versteht sich, dass eine alternative Kabelführung ebenfalls möglich ist. So könnte beispielsweise ein entlang einem Halsabschnitt 89 verlaufender, in Richtung des Zugfahrzeugs 12 führender Kanal 90 vorgesehen sein, so dass der Kabelaustritt für die Leitung 85 näher beim Zugfahrzeug ist.

Bei der Anhängekupplung 11b könnte alternativ auch beispielsweise vorgesehen sein, dass der Drehwinkelgeber 42 nicht im Kugelkopf 16b angeordnet ist, sondern in einer Anhänger-Kupplung 50b. In einem Gehäuse 53b der Anhänger-Kupplung 50b, die einen Kugelaufnahme 52b zur Ankupplung an den Kugelkopf 16b bereitstellt, ist beispielsweise oberseitig ein Drehwinkelgeber 42', z.B. ein Permanentmagnet, angeordnet.

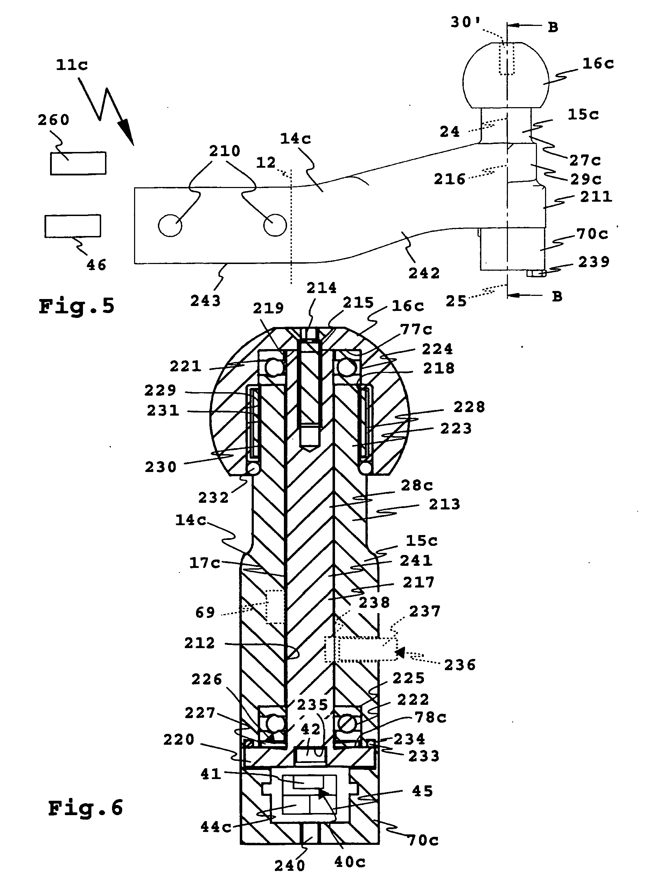

Bei einer Anhängekupplung 11c gemäß Figuren 5 und 6 ist ein gegenüber den vorgenannten Anhängekupplungen verbessertes Drehlagerungskonzept verwirklicht. Ansonsten sind sämtliche bei den Anhängekupplungen 10a, 10b dargestellten Ausführungsformen und Merkmale auch bei der Anhängekupplung 11c applizierbar. Beispielsweise kann an der Oberseite eines Kugelkopfes 16c der Anhängekupplung 11c eine Formschlusskontur 30', z.B. eine Nut oder dergleichen, zur formschlüssigen Verbindung mit einer in Figur 5 nicht eingezeichneten Anhängekupplung, beispielsweise in der Art der Anhängerkupplungen 50a, vorgesehen sein. Ferner ist eine Sensoreinrichtung 40c der Anhängekupplung 11c ähnlich ausgestaltet wie die Sensoreinrichtung 40a, das heißt sie hat beispielsweise einen Drehwinkelsensor 41, der mit einem Drehwinkelgeber 42 zusammenwirkt, um eine Drehposition des Kugelkopfes 16c bezüglich des Zügfahrzeugs 12 zu ermitteln. Ferner hat auch die Sensoreinrichtung 40c eine Kommunikationsschnittstelle 45 zur Ankopplung an das Kommunikationsnetz 46 des schematisch dargestellten Zugfahrzeuges 12.

Ein Kupplungsarm 14c ist beispielsweise mittels einer Bolzenverbindung an dem Zugfahrzeug 12 befestigbar. Hierfür sind in Querrichtung des Kupplungsarms 14c verlaufende Bohrungen 210 zum Durchstecken von Befestigungsbolzen vorgesehen. Der Kupplungsarm 14c steht im am Zugfahrzeug 12 angebauten Zustand im Wesentlichen horizontal nach hinten vor das Zugfahrzeug 12 vor. An einem freien Ende 211 des Kupplungsarms 14c ist ein Kupplungsarm-Lagerabschnitt 29c zur drehbaren Lagerung des Kugelkopfes 16c vorgesehen. Der Kugelarm-Lagerabschnitt 29c weist eine Lageraufnahme 212 auf, in der ein den Kugelkopf 16c an seinem oberen Ende festhaltender Kugelträger 15c drehbar aufgenommen ist. Die Lageraufnahme 212 verläuft im Wesentlichen vertikal, so dass der Kugelkopf 16c um eine Hochachse 25 drehbar ist. Die Lageraufnahme 212 bildet einen Bestandteil eines Drehlagers 17c zur drehbaren Lagerung des Kugelkopfs 16c. An seinem freien Ende 211 bildet der Kugelarm-Lagerabschnitt 29c eine Art Hohlwelle 13, die den zumindest in seinem unteren Abschnitt als eine Kugelträgerdrehwelle 28c ausgestalten Kugelträger 15c drehbar aufnimmt.

Der Kugelträger 15c und der Kugelkopf 16c sind fest miteinander verbunden. Zur festen verbindung könnte beispielsweise eine Klebe- oder Schweißverbindung vorgesehen sein. Bei der Anhängekupplung 11c ist jedoch eine Schraubverbindung vorgesehen. Bei dieser Schraubverbindung ist eine Schraube 214 von einer oberen Flachseite des Kugelkopfs 16c her in eine obere Stirnseite des Kugelträgers 15c eingeschraubt. Dort befindet sich eine Schraubaufnahme 215, die in Längserstreckungsrichtung 216 des Kugelträgers 15c verläuft.

Die Lageraufnahme 212 sowie die Kugelträgerdrehwelle 28c sind langgestreckt. Dies schafft eine optimale Abstützung des Kugelkopfstücks 27c bezüglich des Kupplungsarms 14c, so dass beim Betrieb der Anhängekupplung 11c auftretende Kräfte, insbesondere Querkräfte, Zugkräfte und dergleichen Horizontalkräfte durch das Drehlager 17c optimal aufgenommen werden können. Ein vor dem Kugelkopf 16c vorstehender Drehwellenabschnitt 217 des Kugelträgers 15c ist beispielsweise ungefähr zu 1,5 bis 2 mal so lang wie ein Durchmesser des Kugelkopfs 16c.

Aber auch Vertikalkräfte, beispielsweise auf den Kugelkopf 16c wirkende Stützkräfte oder Zugkräfte, sind bei der Anhängekupplung 11c optimal abgestützt:
Zum Abstützen von Stützkräften, die von vertikal oben auf den Kugelkopf 16c wirken, ist in einem Innenraum 218 ein Axialanschlag 77c vorgesehen. Der Axialanschlag 77c wird durch eine obere Wandseite 219 des Innenraums 218 bereitgestellt. Zum Abfangen von vertikal nach oben wirkenden Axialkräften, die beispielsweise beim Überfahren von Kuppen auftreten können, ist ein unterer Axialanschlag 78c am vom Kugelkopf 16c entfernten Ende des Kugelkopfstücks 27c vorgesehen. Der Axialanschlag 78c ist an einem Flanschvorsprung 220 des Kugelträgers 15c vorgesehen. Der Flanschvorsprung 220 bildet eine Art Teller. Der Flanschvorsprung 220 ist an einem freien, von dem Kugelkopf 16c entfernten Ende der Kugelträgerdrehwelle 28c angeordnet. Somit ist der Kupplungsarm-Lagerabschnitt 29c zwischen den beiden Axialanschlägen 77c, 78c aufgenommen.

Nun wäre es bei einer nicht dargestellten Ausführungsform der Erfindung zwar prinzipiell möglich, dass die zwischen den Axialanschlägen 77c und/oder 78c einerseits und andererseits dem Kupplungsarm 14c ein Gleitlager vorgesehen ist. Zur Verbesserung der Drehbarkeit des Kugelkopfs 16c auch bei großen Axialkräften, die entlang der Drehachse 24 wirken, sind jedoch Axial-Wälzlager 221, 222 vorgesehen.

Das vordere Axial-Wälzlager 221 stützt sich einerseits an der oberen Wandseite 219 und andererseits an einem oberen, freien Ende 223 des Kugelarm-Lagerabschnitts 29c ab. Das Axial-Wälzlager 221 ist in einer Lageraufnahme 224 des Innenraums 218 aufgenommen. Das untere, im Wesentlichen für am Kugelkopf 16c vorgesehene Axial-Wälzlager 222 ist in einem Lageraufnahmeraum 225 des Kupplungsarms 14c aufgenommen. Der Lageraufnahmeraum 225 schließt sich an die Lageraufnahme 212 für die Kugelträgerdrehwelle 28c unmittelbar an.

Nun wäre es zwar möglich, dass sich der Axialanschlag 28c bzw. der Flanschvorsprung 220 unmittelbar auf dem Axial-Wälzlager 222 abstützt (nicht dargestellt). Bei der Anhängekupplung 11c ist jedoch eine Federanordnung 226 zwischen dem Axialanschlag 78c und dem Axial-Wälzlager 222 vorgesehen. Die Federanordnung 226 umfasst eine Tellerfeder 227 zwischen dem Axial-Wälzlager 222 und dem Flanschvorsprung 220. Die Tellerfeder 227 wird von der Kugelträgerdrehwelle 28c durchdrungen. Die Federanordnung 226 gleicht z.B. ein beim Betrieb und/oder durch Abnutzung der Anhängekupplung 11c auftretendes Axialspiel zwischen dem Kugelarm-Lagerabschnitt 29c und den Axialanschlägen 77c, 78c aus.

Es versteht sich, dass zum Ausgleich eines Radialspiels ebenfalls Federanordnungen vorgesehen sein können (nicht dargestellt).

Zusätzlich zu der Drehlagerung zwischen der Kugelträgerdrehwelle 28c und der Lageraufnahme 212 ist zur radialen Lagerung des Kugelkopfstücks 27c bezüglich des Kugelarm-Lagerabschnitts 29c ein Radial-Wälzlager 228 vorgesehen. Das Radial-Wälzlager 228 ist in einem Lageraufnahmeraum 229 des Innenraums 218 des Kugelkopfes 16c angeordnet und somit vor Umwelteinflüssen geschützt. Das Radial-Wälzlager 228 stützt sich einerseits an einer Umfangswand 230 des oberen, freien Endes 223 des Kugelarm-Lagerabschnitts 29c, das in den Innenraum 218 hineinragt bzw. dort angeordnet ist, und andererseits einer inneren Umfangswand 231 des Lageraufnahmeraums_ 229 oder des Innenraums 218 ab.

Das Radial-Wälzlager 228 ist vollständig in dem Innenraum 218 aufgenommen und bereits dadurch gut gegenüber Umwelteinflüssen geschützt.

Bei der Anhängekupplung 11c sind jedoch als zusätzliche Dichtmaßnahmen Dichtungen 232, 233 vorgesehen. Die Dichtungen 232, 233 sind zweckmäßigerweise O-Ringe.

Die Dichtung 232 ist zwischen dem Kugelkopf 16c und der Umfangswand 230 zur Abdichtung des die Wälzlager 221, 228 aufnehmenden Innenraums 218 des Kugelkopfs 16c angeordnet. Beispielsweise weist das freie, im Innenraum 218 aufgenommene freie Ende 223 einen geringeren Durchmesser als ein außerhalb des Innenraums 218 liegender Abschnitt des Kugelarm-Lagerabschnitt 29c auf, so dass dadurch ein Dichtungssitz für die Dichtung 232 geschaffen ist.

Die Dichtung 233 ist zwischen dem Flanschvorsprung 220 und einer in der Zeichnung unteren Stirnseite des Kugelarm-Lagerabschnitts 29c angeordnet, beispielsweise in einer Ringnut 234 an dieser Stirnseite.

Unterhalb des Kugelarm-Lagerabschnittes 29c ist die Sensoreinrichtung 40c angeordnet. Die Sensoreinrichtung 40c umfasst ein Schutzgehäuse 70c, in dem der Drehwinkelsensor 41 aufgenommen ist, beispielsweise ein magnetoresistiver Sensor, ein Hall-Sensor oder dergleichen. Der Drehwinkelsensor 41 befindet sich direkt unterhalb des Kugelkopfstücks 27c, insbesondere direkt unterhalb des freien Endes der Kugelträgerdrehwelle 28c. Dort ist eine Aufnahme 235 für den Drehwinkelgeber 42 vorgesehen, beispielsweise einen Permanentmagneten. An dieser Stelle sei bemerkt, dass der Drehwinkelsensor 41 auch ein optischer Sensor sein kann, der optische Markierungen am Kugelkopfstück 27c, beispielsweise Linienmärkierungen, abtastet und daraus ein Drehwinkelsignal 37 generiert.

Die Kugelträgerdrehwelle 28c bildet ein Übertragungsglied 241 zur Übertragung einer Drehposition des Kugelkopfs 16c zum Drehwinkelsensor 41. Der Drehwinkelsensor 41 ist am Kupplungsarm 14c mit einem Abstand zu dem Kugelkopf 16c angeordnet.

Die Kommunikationsschnittstelle 45 ist zur Ankopplung an ein Einparkhilfesystem 260 des Zugfahrzeuges 12 und/oder der Fahrstabilisierungseinrichtung 47 des Zugfahrzeugs 12 ausgestaltet. Mit Hilfe des Einparkhilfesystems 260, das beispielsweise vordere, lenkbare Räder 49 ansteuert und ferner auch einen Antriebsmotor sowie Bremsen des Zugfahrzeugs 12, ist ein automatisches oder halbautomatisches Einparken des Gespanns aus Zugfahrzeug 12 und Anhänger 51 möglich.

Auch die Anhängekupplung 11c kann zweckmäßigerweise mit mindestens einer Bremseinrichtung ausgestaltet sei, so z.B. mit einer Bremseinrichtung 69, zum Bremsen einer Drehbewegung des Kugelkopfs 16c relativ zum Kupplungsarm 14c. Die Bremseinrichtung 69 ist beispielsweise am Drehlager 17c angeordnet. Beispielsweise arbeitet die Bremseinrichtung 69 nach einem magnetischen Prinzip, einem Reibprinzip oder dergleichen.

Eine Bremskraft der Bremseinrichtung 69 kann durch eine Steuereinrichtung 44c gesteuert werden, die beispielsweise in der Art der vorbeschriebenen Steuereinrichtung 44a, 44c, insbesondere interaktiv mit Einrichtungen des Zugfahrzeugs 12, die Bremseinrichtung 69 zur Einstellung ihrer Bremskraft aristeuert.

Insbesondere zum Aufsetzen eines Heckträgers auf den Kugelkopf 16c, beispielsweise eines Fahrradträgers oder dergleichen, ist es vorteilhaft, wenn die Bremseinrichtung 69 zu einem vollständigen Abbremsen im Sinne eines Blockierens des Kugelkopfes 16c ausgestaltet ist. Es ist aber auch möglich, dass alternativ oder ergänzend eine Blockiereinrichtung 236 vorgesehen ist, mit der eine Drehbewegung des Kugelkopfes 16c bezüglich des Kupplungsarmes 14c vollständig blockierbar ist. Die Blockiereinrichtung 236 umfasst ein am Kugelarm-Lagerabschnitt 29c verschieblich gelagertes Blockierteil 237, das in einer Blockierstellung in eine Blockieraufnahme 238 an dem Kugelkopfstück 27c, beispielsweise dessen Kugelträgerdrehwelle 28c, eingreift.

Das Schutzgehäuse 70c ist beispielsweise mittels einer Schraube 239 am Kupplungsarms 14c befestigt. Ein Schutzgehäuse für eine Sensoreinrichtung und/oder eine Steuereinrichtung einer erfindungsgemäßen Anhängekupplung kann aber auch einen integralen Bestandteil eines Kupplungsarmes bilden.

Das Schutzgehäuse 70c hat einen Kabelauslass 240 zur Durchführung von Verbindungsleitungen zum Kommunikationsnetz 46 des Zugfahrzeugs 12, beispielsweise an einem Boden des Schutzgehäuses.

Alternativ ist es auch möglich, dass bei einer erfindungsgemäßen Anhängekupplung eine drahtlose Verbindung zwischen Sensoreinrichtung und/oder Steuereinrichtung für die Bremseinrichtung einerseits und Kommunikationsnetz eines Zugfahrzeugs andererseits drahtlos erfolgt.

Ferner ist eine drahtlose und drahtgebundene Verbindung zwischen einer erfindungsgemäßen Anhängekupplung und dem Zugfahrzeug vorteilhaft, wobei beispielsweise Steuerinformationen und Meldeinformationen drahtlos übermittelt werden, während ein Energiefluss drahtgebunden ist. Bei dieser Ausführungsform ist es vorteilhaft, wenn auf Seiten der Sensoreinrichtung und/oder der Steuereinrichtung für die Bremseinrichtung ein elektrischer Pufferspeicher, beispielsweise ein Pufferkondensator, Akkumulator oder dergleichen vorgesehen ist.

Bei einer erfindungsgemäßen Anhängekupplung ist es vorteilhaft, wenn die Sensoreinrichtung, insbesondere deren Schutzgehäuse, nicht unterhalb eines tiefsten Punktes des jeweiligen Kupplungsarmes angeordnet ist oder zumindest nicht vor den tiefsten Kupplungsarm-Punkt vorsteht. Zu diesem Zweck weist der Kupplungsarm 14c beispielsweise eine Krümmung 242 auf, so dass das Schutzgehäuse 70c in einem vom Untergrund weg gekrümmten Bereich des Kupplungsarms 14c angeordnet ist und zumindest nicht wesentlich vor einen tiefsten Bereich 243 des Kupplungsarms 14c nach unten vorsteht. Der tiefste Bereich 243 ist in der Nähe des Zugfahrzeugs 12, während der weggekrümmte, obere Bereich, an dem die Sensoreinrichtung 40c angeordnet ist, im Bereich des freien Endes 211 des Kupplungsarms 14c angeordnet ist.

## Patentansprüche

1. Anhängekupplung für ein Zugfahrzeug (12), insbesondere ein Personen-Kraftfahrzeug, zum Anhängen eines Anhängers (51) an das Zugfahrzeug (12), mit einer einen Kugelkopf (16a; 16b; 16c) aufweisenden Kupplungskugel, die an einem freien Ende eines Kugelträgers (15a; 15b; 15c) angeordnet ist und auf die eine Kupplungsaufnahme einer Anhänger-Kupplung (50a; 50b) des Anhängers (51) aufsetzbar ist, und mit einem Drehlager (17a; 17b; 17c) zur drehbaren Lagerung des Kugelkopfs (16a; 16b; 16c) bezüglich des Zugfahrzeugs (12), wobei die Kupplungskugel und der Kugelträger (15a; 15b; 15c) fest verbunden oder einstückig sind und ein Kugelkopfstück (27a; 27b; 27c) bilden, wobei der Kugelträger (15a; 15b; 15c) an einem mit dem Zugfahrzeug (12) fest verbindbaren oder verbundenen Kupplungsarm (14a; 14b; 14c) anhand des Drehlagers (17a; 17b; 17c) um eine Drehachse (24) drehbar gelagert ist, wobei der Kugelträger (15a; 15b; 15c) vor den Kugelkopf (16a; 16b; 16c) vorsteht und eine Kugelträgerdrehwelle (28a-28c) zur Drehlagerung (17a; 17b; 17c) des Kugelkopfs (16a; 16b; 16c) an einem Kupplungsarm-Lagerabschnitt (29a-29c) des Kupplungsarms (14a; 14b; 14c) bildet oder aufweist, **dadurch gekennzeichnet, dass** sie ein Radial-Wälzlager (221, 222) zwischen dem Kugelkopf (16a; 16b; 16c) und Kupplungsarm-Lagerabschnitt (29a-29c) aufweist und/oder dass mindestens ein Wälzlager in einem Innenraum (218) des Kugelkopfs (16a; 16b; 16c) angeordnet ist.

2. Anhängekupplung nach Anspruch 1, **dadurch gekennzeichnet, dass** der Kupplungsarm-Lagerabschnitt (29a-29c) als eine die Kugelträgerdrehwelle (28a-28c) aufnehmende Hohlwelle (213) ausgestaltet ist oder die Kugelträgerdrehwelle (28a-28c) als eine Hohlwelle ausgestaltet ist.

3. Anhängekupplung nach Anspruch 1 oder 2, **dadurch gekennzeichnet, dass** die Kugelträgerdrehwelle (28a-28c) eine langgestreckte Form aufweist, wobei eine Länge eines vor den Kugelkopf (16a; 16b; 16c) vorstehenden Drehwellenabschnitts (217) der Kugelträgerdrehwelle (28a-28c) mindestens einem Durchmesser des Kugelkopfs (16a; 16b; 16c), vorzugsweise mindestens dem 1,5-bis zweifachen Durchmesser des Kugelkopfs (16a; 16b; 16c), entspricht.

4. Anhängekupplung nach einem der vorhergehenden Ansprüche, **dadurch gekennzeichnet, dass** das Kugelkopfstück (27a; 27b; 27c) und/oder der Kugelträger (15a; 15b; 15c) mindestens einen gegen ein Verschieben entlang der Drehachse (24) wirksamen Axialanschlag (77a, 78a; 77c, 78c) aufweist, wobei der mindestens eine Axialanschlag (77a, 78a; 77c, 78c) zweckmäßigerweise an dem Kugelkopf (16a; 16b; 16c) und/oder an dem Kugelträger, insbesondere an einem Flanschvorsprung (220) des Kugelträgers (15a; 15b; 15c) und/oder einer auf den Kugelträger aufgeschraubten Mutter, vorgesehen ist und/oder wobei dem mindestens einen Axialanschlag (77a, 78a; 77c, 78c) vorteilhaft ein um die Drehachse (24) drehbares Axial-Wälzlager (221, 222), insbesondere ein Kugellager, zur Aufnahme von entlang der Drehachse (24) auf den Kugelkopf (16a; 16b; 16c) wirkenden Kräften zugeordnet ist.

5. Anhängekupplung nach einem der vorhergehenden Ansprüche, **dadurch gekennzeichnet, dass** der Kupplungsarm-Lagerabschnitt (29a-29c) in einen Innenraum (218) des Kugelkopfs (16a; 16b; 16c) vorsteht und/oder der Kupplungsarm-Lagerabschnitt (29a-29c) zwischen Axialanschlägen (77a, 78a; 77c, 78c) des Kugelkopfstücks (27a; 27b; 27c) angeordnet ist.

6. Anhängekupplung nach einem der vorhergehenden Ansprüche, **dadurch gekennzeichnet, dass** das mindestens eine in dem Innenraum (218) des Kugelkopfs (16a; 16b; 16c) angeordnete Wälzlager das Radial-Wälzlager (228) und/oder das Axial-Wälzlager (221, 222) umfasst.

7. Anhängekupplung nach einem der vorhergehenden Ansprüche, **dadurch gekennzeichnet, dass** sie mindestens eine Dichtung (232, 233) zwischen dem Kupplungsarm-Lagerabschnitt (29a-29c) und einem Bestandteil des Kugelkopfstücks (27a; 27b; 27c), insbesondere der Kugelträgerdrehwelle (28a-28c) und/oder dem Kugelkopf (16a; 16b; 16c), aufweist.

8. Anhängekupplung nach einem der vorhergehenden Ansprüche, **dadurch gekennzeichnet, dass** sie mindestens eine gegen ein Axialspiel und/oder Radialspiel des Kugelkopfstücks (27a; 27b; 27c) bezüglich des Kupplungsarm-Lagerabschnitts (29a-29c) des Kupplungsarms (14a; 14b; 14c) wirkende Federanordnung (226) aufweist, die insbesondere mindestens eine Tellerfeder (227) umfasst, wobei die Federanordnung (226) zweckmäßigerweise zwischen dem mindestens einen Axialanschlag (77a, 78a; 77c, 78c) und dem Kupplungsarm-Lagerabschnitt (29a-29c) angeordnet ist.

9. Anhängekupplung nach einem der vorhergehenden Ansprüche, **dadurch gekennzeichnet, dass** sie eine Sensoreinrichtung (40a, 40b) zur Erfassung einer Drehwinkellage des Anhängers (51) bezüglich des Zugfahrzeugs (12) aufweist, und dass die Sensoreinrichtung (40a, 40b) einen Drehwinkelsensor (41) zur Zusammenwirkung mit einem drehfesten Drehwinkelgeber (42), insbesondere einen Permanentmagneten (43) umfasst, wobei der Drehwinkelsensor (41) fahrzeugfest und der Drehwinkelgeber (42) bezüglich des Kugelkopfs (16a; 16b; 16c) drehfest ist oder umgekehrt.

10. Anhängekupplung nach Anspruch 9, **dadurch gekennzeichnet, dass** der Drehwinkelsensor (41) mindestens einen Magnet-Sensor, insbesondere einen magnetoresistiven Sensor oder einen Hall-Sensor, und der Drehwinkelgeber (42) mindestens einen Permanentmagneten (43) umfasst und/oder dass der Drehwinkelsensor (41) an dem Kupplungsarm (14a; 14b; 14c) angeordnet ist und/oder dass der Drehwinkelgeber (42) an dem Kugelträger (15a; 15b; 15c) oberhalb des Drehwinkelsensors (41) angeordnet ist und/oder dass die Kugelträgerdrehwelle (28a-28c) ein Übertragungsglied (241) zur Übertragung einer Drehposition des Kugelkopfes (16a; 16b; 16c) bildet und/oder dass der Drehwinkelgeber (42) und/oder der Drehwinkelsensor (41) vor Umwelteinflüssen, insbesondere durch ein Gehäuse (70; 70c) und/oder durch Schutzaufnahmen an dem Kugelträger (15a; 15b; 15c) und/oder an dem Kupplungsarm (14a; 14b; 14c) oder an dem Kugelkopf (16a; 16b; 16c), geschützt sind und/oder dass die Sensoreinrichtung (40a, 40b) eine Kommunikationsschnittstelle (45) für ein Kommunikationsnetz (46) des Zugfahrzeugs (12) aufweist und/oder dass die Sensoreinrichtung (40a, 40b) zur Ermittlung einer Basiswinkellage des Kugelkopfs (16a; 16b; 16c) oder der Anhänger-Kupplung (50a; 50b) relativ zu dem Kupplungsarm (14a; 14b; 14c) Fahrinformationen über einen Fahrzustand, insbesondere über eine Fahrtrichtung, des Zugfahrzeugs (12) auf dem Kommunikationsnetz (46) empfängt und auswertet und/oder dass die Sensoreinrichtung (40a, 40b) zu einer Kommunikation mit einer elektronischen Fahrstabilisierungseinrichtung (47) des Zugfahrzeugs (12) und/oder mit einem Einparkhilfesystem (260) zum zumindest halbautomatischen Einparken des Zugfahrzeugs (12) ausgestaltet ist.

11. Anhängekupplung nach einem der vorhergehenden Ansprüche, **dadurch gekennzeichnet, dass** sie eine Bremseinrichtung (65, 66; 68; 69), insbesondere eine Reibbremse und/oder eine piezo-elektrische Bremseinrichtung, zum Bremsen einer Drehung des Kugelkopfs (16a; 16b; 16c) bezüglich des Zugfahrzeugs (12) und/oder eine Blockiereinrichtung (236) zum Blockieren einer Drehung des Kugelkopfs bezüglich des Zugfahrzeugs aufweist.

12. Anhängekupplung nach Anspruch 11, **dadurch gekennzeichnet, dass** die Bremseinrichtung (65, 66; 68; 69) auf den Kugelkopf (16a; 16b; 16c) und/oder den Kugelträger (15a; 15b; 15c) und/oder das Drehlager (17a; 17b; 17c) wirkt und/oder dass eine Bremskraft der Bremseinrichtung (65, 66; 68; 69) einstellbar ist und/oder dass sie eine Steuereinrichtung (44a; 44b; 44c) zu einer Veränderung der Bremskraft der Bremseinrichtung (65, 66; 68; 69) in Abhängigkeit von einer Fahrtrichtung und/oder einer Fahrgeschwindigkeit des Zugfahrzeugs (12) und/oder einer Drehwinkelgeschwindigkeit eines Drehwinkels des Anhängers (51) relativ zu dem Zugfahrzeug (12) aufweist und/oder dass die Bremseinrichtung (65, 66; 68; 69) eine und die Sensoreinrichtung (40a, 40b) eine Baueinheit bilden.

13. Anhängekupplung nach Anspruch 12, **dadurch gekennzeichnet, dass** die Steuereinrichtung (44a; 44b; 44c) eine Kommunikationsschnittstelle (45) für ein Kommunikationsnetz (46) des Zugfahrzeugs (12) aufweist und/oder dass die Steuereinrichtung (44a; 44b; 44c) ein Bestandteil der Sensoreinrichtung (40a, 40b) oder der Bremseinrichtung (65, 66; 68; 69) ist oder durch die Sensoreinrichtung (40a, 40b) oder die Bremseinrichtung (65, 66; 68; 69) gebildet ist.

14. Anhängekupplung nach einem der vorhergehenden Ansprüche, **dadurch gekennzeichnet, dass** an dem Kugelkopf (16a; 16b; 16c) oder dem Kugelträger (15a; 15b; 15c) mindestens eine Formschlusskontur (30) zu einer drehfesten Zusammenwirkung bezüglich einer Hochachse (25) mit einer Gegen-Formschlusskontur (60) der Anhänger-Kupplung (50a; 50b) angeordnet ist, so dass eine Drehbewegung des Anhängers (51) auf den Kugelkopf (16a; 16b; 16c) oder den Kugelträger (15a; 15b; 15c) übertragbar ist, wobei die mindestens eine Formschlusskontur (30) zweckmäßigerweise mindestens eine Aufnahme, insbesondere eine Nut (31a, 31b), umfasst und/oder wobei die mindestens eine Formschlusskontur (30), insbesondere die Aufnahme, zweckmäßigerweise mindestens eine Einführschräge (35) zum Einführen der Gegen-Formschlusskontur (60) beim Ankuppeln des Anhängers (51) aufweist und/oder wobei die mindestens eine Formschlusskontur (30) vorteilhaft eine Drehbewegung des Anhängers (51) bezüglich des Kugelkopfs (16a; 16b; 16c) quer zu einer Horizontalebene zulässt und/oder wobei die mindestens eine Formschlusskontur (30) vorteilhaft an einer vertikalen Seitenfläche des Kugelkopfs (16a; 16b; 16c) angeordnet ist und/oder wobei die mindestens eine Formschlusskontur (30) vorteilhaft einen im wesentlichen vertikalen Verlauf aufweist und/oder wobei die mindestens eine Formschlusskontur (30) zweckmäßigerweise zwei zueinander bezüglich der Hochachse (25) zueinander drehwinkelversetzte, insbesondere an einander entgegengesetzten Vertikalseiten des Kugelkopfs (16a; 16b; 16c) angeordnete, Formschlusskonturen (30) aufweist.

15. Anhängekupplung nach einem der vorhergehenden Ansprüche, **dadurch gekennzeichnet, dass** der Kupplungsarm (14a; 14b; 14c) aus einem vorzugsweise gebogenen Flachmaterial besteht und/oder dass der Kupplungsarm (14a; 14b; 14c) beweglich am Zugfahrzeug (12) gelagert und/oder am Zugfahrzeug (12) lösbar befestigbar ist.

## Claims

1. Trailer coupling for a towing vehicle (12), in particular a passenger car, for attaching a trailer (51) to the towing vehicle (12), comprising a hitch ball having a spherical head (16a; 16b; 16c), which is located at a free end of a ball support (15a; 15b; 15c) and to which a coupling receptacle of a trailer coupling (50a; 50b) of the trailer (51) can be fitted, and further comprising a pivot bearing (17a; 17b; 17c) for the rotatable mounting of the spherical head (16a; 16b; 16c) with respect to the towing vehicle (12), wherein the hitch ball and the ball support (15a; 15b; 15c) are securely joined to or integrated with each other and form a spherical head piece (27a; 27b; 27c), wherein the ball support (15a; 15b; 15c) is mounted on a coupling arm (14a; 14b; 14c) which is securely connectable or connected to the towing vehicle (12) while being capable of rotation about an axis of rotation (24) by means of the pivot bearing (17a; 17b; 17c), wherein the ball support (15a; 15b; 15c) projects in front of the spherical head (16a; 16b; 16c) and forms or comprises a ball support shaft (28a-28c) for the rotatable mounting (17a; 17b; 17c) of the spherical head (16a; 16b; 16c) on a coupling arm bearing section (29a-29c) of the coupling arm (14a; 14b; 14c), **characterised in that** it comprises a radial antifriction bearing (221, 222) between the spherical head (16a; 16b; 16c) and the coupling arm bearing section (29a-29c), and/or **in that** at least one antifriction bearing is provided in an interior (218) of the spherical head (16a; 16b; 16c).

2. Trailer coupling according to claim 1, **characterised in that** the coupling arm bearing section (29a-29c) is designed as a hollow shaft (213) accommodating the ball support shaft (28a-28c) or **in that** the ball support shaft (28a-28c) is designed as a hollow shaft.

3. Trailer coupling according to claim 1 or 2, **characterised in that** the ball support shaft (28a-28c) has an elongated shape, the length of a shaft section (217) of the ball support shaft (28a-28c) which projects in front of the spherical head (16a; 16b; 16c) corresponding to at least one diameter of the spherical head (16a; 16b; 16c) and preferably to at least 1.5-times to twice the diameter of the spherical head (16a; 16b; 16c).

4. Trailer coupling according to any of the preceding claims, **characterised in that** the spherical head piece (27a; 27b; 27c) and/or the ball support (15a; 15b; 15c) comprise(s) at least one axial stop (77a, 78a; 77c, 78c) preventing a displacement along the axis of rotation (24), wherein the at least one axial stop (77a, 78a; 77c, 78c) is expediently provided on the spherical head (16a; 16b; 16c) and/or on the ball support, in particular on a flange projection (220) of the ball support (15a; 15b; 15c) and/or on a nut tightened onto the ball support, and/or wherein an antifriction thrust bearing (221, 222), in particular a ball bearing, rotatable about the axis of rotation (24) is expediently assigned to the at least one axial stop (77a, 78a; 77c, 78c) in order to absorb forces acting on the spherical head (16a; 16b; 16c).

5. Trailer coupling according to any of the preceding claims, **characterised in that** the coupling arm bearing section (29a-29c) projects into an interior (218) of the spherical head (16a; 16b; 16c), and/or **in that** the coupling arm bearing section (29a-29c) is located between axial stops (77a, 78a; 77c, 78c) of the spherical head piece (27a; 27b; 27c).

6. Trailer coupling according to any of the preceding claims, **characterised in that** the at least one antifriction bearing located in the interior (218) of the spherical head (16a; 16b; 16c) includes the radial antifriction bearing (228) and/or the antifriction thrust bearing (221, 222).

7. Trailer coupling according to any of the preceding claims, **characterised in that** it comprises at least one seal (232, 233) between the coupling arm bearing section (29a-29c) and a component of the spherical head piece (27a; 27b; 27c), in particular the ball support shaft (28a-28c) and/or the spherical head (16a; 16b; 16c).

8. Trailer coupling according to any of the preceding claims, **characterised in that** it comprises at least one spring arrangement (226) acting against an axial and/or radial play of the spherical head piece (27a; 27b; 27c) with respect to the coupling arm bearing section (29a-29c) of the coupling arm (14a; 14b; 14c), which comprises in particular at least one Belleville spring (227), the spring arrangement (226) being expediently located between the at least one axial stop (77a, 78a; 77c, 78c) and the coupling arm bearing section (29a-29c).

9. Trailer coupling according to any of the preceding claims, **characterised in that** it comprises a sensor device (40a, 40b) for the detection of a rotary angle position of the trailer (51) with respect to the towing vehicle (12), and **in that** the sensor device (40a, 40b) comprises a rotary angle sensor (41) designed to act together with a rotary angle transmitter (42), in particular a permanent magnet (43), wherein the rotary angle sensor (41) is mounted on the vehicle and the rotary angle transmitter (42) is non-rotatable with respect to the spherical head (16a; 16b; 16c) or vice versa.

10. Trailer coupling according to claim 9, **characterised in that** the rotary angle sensor (41) comprises at least one magnetic sensor, in particular a magneto-resistive sensor or a Hall sensor, and the rotary angle transmitter (42) comprises at least one permanent magnet (43), and/or **in that** the rotary angle sensor (41) is located on the coupling arm (14a; 14b; 14c), and/or **in that** the rotary angle transmitter (42) is located on the ball support (15a; 15b; 15c) above the rotary angle sensor (41), and/or **in that** the ball support shaft (28a-28c) forms a transmission element for the transmission of a rotary position of the spherical head (16a; 16b; 16c), and/or **in that** the rotary angle transmitter (42) and/or the rotary angle sensor (41) is/are protected against the environment, in particular by a housing (70; 70c) and/or by protective locations on the ball support (15a; 15b; 15c) and/or on the coupling arm (14a; 14b; 14c) and/or on the spherical head (16a; 16b; 16c), and/or **in that** the sensor device(40a, 40b) comprises a communication interface (45) for a communication network (46) of the towing vehicle (12), and/or **in that** the sensor device (40a, 40b) receives on the communication network travelling information on a travelling state, in particular on a direction of travel, of the towing vehicle (12) in order to detect a base angle position of the spherical head (16a; 16b; 16c) or of the trailer coupling (50a; 50b) relative to the coupling arm (14a; 14b; 14c) and evaluates said information, and/or **in that** the sensor device (40a, 40b) is designed for communication with an electronic stabilising device (47) of the towing vehicle (12) and/or with a park distance control system (260) for the at least semi-automatic parking of the towing vehicle (12).

11. Trailer coupling according to any of the preceding claims, **characterised in that** is comprises a braking device (65, 66; 68; 69), in particular a friction brake and/or a piezoelectric braking device, for braking a rotation of the spherical head (16a; 16b; 16c) with respect to the towing vehicle (12), and/or a blocking device (236) for blocking a rotation of the spherical head with respect to the towing vehicle.

12. Trailer coupling according to claim 11, **characterised in that** the braking device (65, 66; 68; 69) acts on the spherical head (16a; 16b; 16c) and/or on the ball support (15a; 15b; 15c) and/or on the pivot bearing (17a; 17b; 17c), and/or **in that** a braking force of the braking device (65, 66; 68; 69) is adjustable, and/or **in that** it comprises a control device (44a; 44b; 44c) for changing the braking force of the braking device (65, 66; 68; 69) as a function of a direction of travel or a travelling speed of the towing vehicle (12) and/or of an angular velocity of a rotary angle of the trailer (51) relative to the towing vehicle (12), and/or **in that** the braking device (65, 66; 68; 69) and the sensor device (40a, 40b) form an assembly.

13. Trailer coupling according to claim 12, **characterised in that** the control device (44a; 44b; 44c) comprises a communication interface (45) for a communication network (46) of the towing vehicle (12), and/or **in that** the control device (44a; 44b; 44c) is a part of the sensor device (40a, 40b) or of the braking device (65, 66; 68; 69) or is represented by the sensor device (40a, 40b) or by the braking device (65, 66; 68; 69).

14. Trailer coupling according to any of the preceding claims, **characterised in that** the spherical head (16a; 16b; 16c) or the ball support (15a; 15b; 15c) is provided with at least one positive-locking contour (30) for acting together with a mating positive-locking contour (60) of the trailer coupling (50a; 50b) in a non-rotatable manner with respect to a vertical axis (25), so that a rotary motion of the trailer (51) can be transmitted to the spherical head (16a; 16b; 16c) or the ball support (15a; 15b; 15c), wherein the at least one positive-locking contour (30) expediently comprises at least one receptacle, in particular a groove (31 a, 31 b), and/or wherein the at least one positive-locking contour (30), in particular the receptacle, expediently has at least one insertion bevel (35) for inserting the mating positive-locking contour (60) when coupling the trailer (51), and/or wherein the at least one positive-locking contour (30) advantageously allows a rotary motion of the trailer (51) with respect to the spherical head (16a; 16b; 16c) at right angles to a horizontal plane, and/or wherein the at least one positive-locking contour (30) is advantageously disposed on a vertical side surface of the spherical head (16a; 16b; 16c), and/or wherein the at least one positive-locking contour (30) advantageously has a substantially vertical extension, and/or wherein the at least one positive-locking contour (30) expediently comprises two positive-locking contours (30) offset from each other by a rotary angle relative to the vertical axis (25) and in particular located on opposite vertical sides of the spherical head (16a; 16b; 16c).

15. Trailer coupling according to any of the preceding claims, **characterised in that** the coupling arm (14a; 14b; 14c) is made of a preferably bent flat material, and/or **in that** the coupling arm (14a; 14b; 14c) is movably mounted on the towing vehicle (12) and/or can be detachably fitted to the towing vehicle (12).

## Revendications

1. Attelage pour un véhicule tracteur (12), en particulier un véhicule motorisé personnel, afin d'accrocher une remorque (51) au véhicule tracteur (12), avec une boule d'attelage présentant une tête de boule (16a; 16b; 16c), boule qui est placée à une extrémité libre d'un support de boule (15a; 15b; 15c) et sur laquelle peut être placé un logement d'attelage d'un attelage de remorque (50a ; 50b) de la remorque (51), et avec un palier rotatif (17a ; 17b ; 17c) pour soutenir de manière rotative la tête de boule (16a ; 16b ; 16c) par rapport au véhicule tracteur (12), dans lequel la boule d'attelage et le support de boule (15a; 15b ; 15c) sont reliés fixement ou sont d'un seul tenant et forment une pièce de tête de boule (27a ; 27b ; 27c), dans lequel le support de boule (15a ; 15b ; 15c) est monté rotatif autour d'un axe de rotation (24) à l'aide du palier rotatif (17a ; 17b ; 17c) sur un bras d'attelage (14a ; 14b; 14c) relié ou pouvant être relié fixement au véhicule tracteur (12), dans lequel le support de boule (15a ; 15b ; 15c) forme saillie devant la tête de boule (16a; 16b ; 16c) et forme ou présente un arbre de rotation de support de boule (28a-28c) pour le soutien rotatif (17a ; 17b ; 17c) de la tête de boule (16a ; 16b ; 16c) sur une section de soutien de bras d'attelage (29a-29c) du bras d'attelage (14a ; 14b ; 14c), **caractérisé en ce qu'**il présente un palier de roulement radial (221, 222) entre la tête de boule (16a ; 16b ; 16c) et la section de soutien de bras d'attelage (29a-29c) et/ou **en ce qu'**au moins un palier de roulement est placé dans un intérieur (218) de la tête de boule (16a ; 16b ; 16c).

2. Attelage selon la revendication 1, **caractérisé en ce que** la section de soutien de bras d'attelage (29a-29c) est conformée en arbre creux (213) recevant l'arbre de rotation de support de boule (28a-28c) ou l'arbre de rotation de support de boule (28a-28c) est conformé en arbre creux.

3. Attelage selon la revendication 1 ou 2, **caractérisé en ce que** l'arbre de rotation de support de boule (28a-28c) présente une forme oblongue, dans lequel une longueur d'une section d'arbre de rotation (217) de l'arbre de rotation de support de boule (28a-28c) formant saillie devant la tête de boule (16a ; 16b ; 16c) correspond au moins à un diamètre égal à 1,5 à 2 fois le diamètre de la tête de boule (16a ; 16b ; 16c).

4. Attelage selon l'une des revendications précédentes, **caractérisé en ce que** la partie de tête de boule (27a ; 27b ; 27c) et/ou le support de boule (15a ; 15b ; 15c) présente au moins une butée axiale (77a, 78a ; 77c, 78c) active contre un déplacement le long de l'axe de rotation (24), dans lequel la dite au moins une butée axiale (77a, 78a ; 77c, 78c) est prévue de manière avantageuse sur la tête de boule (16a; 16b ; 16c) et/ou sur le support de boule, en particulier sur une saillie de bride (220) du support de boule (15a; 15b ; 15c) et/ou sur un écrou vissé sur le support de boule, et/ou dans lequel à la butée axiale (77a, 78a ; 77c, 78c) au nombre d'au moins un est associé de manière avantageuse un palier de roulement axial (221, 222) pouvant tourner au tour de l'axe de rotation (24), en particulier un roulement à billes, pour supporter des forces agissant le long de l'axe de rotation (24) sur la tête de boule (16a ; 16b ; 16c).

5. Attelage selon l'une des revendications précédentes, **caractérisé en ce que** la section de soutien de bras d'attelage (29a-29c) forme saillie dans un intérieur (218) de la tête de boule (16a ; 16b ; 16c) et/ou la section de soutien de bras d'attelage (29a-29c) est placée entre des butées axiales (77a, 78a ; 77c, 78c) de la partie de tête de boule (27a ; 27b ; 27c).

6. Attelage selon l'une des revendications précédentes, **caractérisé en ce que** le dit au moins un palier de roulement placé dans l'intérieur (218) de la tête de boule (16a ; 16b ; 16c) comprend le palier de roulement radial (228) et/ou le palier de roulement axial (221, 222).

7. Attelage selon l'une des revendications précédentes, **caractérisé en ce qu'**il présente au moins un joint (232, 233) entre la section de soutien de bras d'attelage (29a-29c) et un élément de la partie de tête de boule (27a ; 27b ; 27c), en particulier l'arbre de rotation de support de boule (28a-28c) et/ou la tête de boule (16a ; 16b ; 16c).

8. Attelage selon l'une des revendications précédentes, **caractérisé en ce qu'**il présente au moins un système de ressort (226) agissant contre un jeu axial et/ou un jeu radial de la partie de tête de boule (27a; 27b ; 27c) par rapport à la section de soutien de bras d'attelage (29a-29c) du bras d'attelage (14a; 14b ; 14c), système qui comprend au moins une rondelle ressort (227), dans lequel le système de ressort (226) est placé de manière avantageuse entre la dite au moins une butée axiale (77a, 78a; 77c, 78c) et la section de soutien de bras d'attelage (29a-29c).

9. Attelage selon l'une des revendications précédentes, **caractérisé en ce qu'**il présente un dispositif capteur (40a, 40b) pour relever une position angulaire de rotation de la remorque (51) par rapport au véhicule tracteur (12), et **en ce que** le dispositif capteur (40a, 40b) comprend un capteur d'angle de rotation (41) destiné à coopérer avec un codeur d'angle de rotation (42) immobile en rotation, en particulier un aimant permanent (43), dans lequel le capteur d'angle de rotation (41) est solidaire du véhicule et le codeur d'angle de rotation (42) est fixe en rotation par rapport à la tête de boule (16a; 16b; 16c) ou inversement.

10. Attelage selon la revendication 9, **caractérisé en ce que** le capteur d'angle de rotation (41) comprend au moins un capteur magnétique, en particulier un capteur magnéto-résistif ou un capteur à effet Hall, et le codeur d'angle de rotation (42) comprend au moins un aimant permanent (43) et/ou **en ce que** le capteur d'angle de rotation (41) est placé sur le bras d'attelage (14a ; 14b ; 14c) et/ou **en ce que** le codeur d'angle de rotation (42) est placé sur le support de boule (15a; 15b; 15c) au-dessus du capteur d'angle de rotation (41) et/ou **en ce que** l'arbre de rotation du support de boule (28a-28c) forme un organe de transmission (241) pour transmettre une position de rotation de la tête de boule (16a ; 16b ; 16c) et/ou **en ce que** le codeur d'angle de rotation (42) et/ou le capteur d'angle de rotation (41)est/ sont protégé(s) contre les intempéries, en particulier par un boîtier (70 ; 70c) et/ou par des logements de protection sur le support de boule (15a ; 15b ; 15c) et/ou sur le bras d'attelage (14a ; 14b ; 14c) ou sur la tête de boule (16a ; 16b ; 16c), et/ou **en ce que** le dispositif capteur (40a, 40b) présente une interface de communication (45) pour un réseau de communication (46) du véhicule tracteur (12) et/ou **en ce que**, pour déterminer une position angulaire de base de la tête de boule (16a ; 16b ; 16c) ou de l'attelage de remorque (50a ; 50b) par rapport au bras d'attelage (14a ; 14b, 14c), le dispositif capteur (40a, 40b) reçoit et analyse des informations de conduite sur un état de conduite, en particulier sur une direction de conduite, du véhicule tracteur (12) sur le réseau de communication et/ou **en ce que** le dispositif capteur (40a, 40b) est équipé pour une communication avec un dispositif électronique de stabilisation de trajectoire (47) du véhicule tracteur (12) et/ou avec un système d'aide au stationnement (260) pour stationner le véhicule tracteur (12) d'une façon au moins semi-automatique.

11. Attelage selon l'une des revendications précédentes, **caractérisé en ce qu'**il présente un dispositif de freinage (65, 66 ; 68 ; 69), en particulier un frein à friction et/ou un dispositif de freinage piézoélectrique, pour freiner une rotation de la tête de boule (16a ; 16b ; 16c) par rapport au véhicule tracteur (12) et/ou un dispositif de blocage (236) pour bloquer une rotation de la tête de boule par rapport au véhicule tracteur.

12. Attelage selon la revendication 11, **caractérisé en ce que** le dispositif de freinage (65, 66 ; 68 ; 69) agit sur la tête de boule (16a ; 16b ; 16c) et/ou sur le support de boule (15a ; 15b ; 15c) et/ou sur le palier rotatif (17a ; 17b ; 17c) et/ou **en ce qu'**une force de freinage du dispositif de freinage (65, 66 ; 68 ; 69) est réglable et/ou **en ce qu'**il présente un dispositif de commande (44a ; 44b ; 44c) pour modifier la force de freinage du dispositif de freinage (65, 66 ; 68 ; 69) en fonction d'une direction de conduite et/ou d'une vitesse de conduite du véhicule tracteur (12) et/ou d'une vitesse angulaire de rotation d'un angle de rotation de la remorque (51) par rapport au véhicule tracteur (12) et/ou **en ce que** le dispositif de freinage (65, 66 ; 68 ; 69) forme une unité et le dispositif capteur (40a, 40b) une autre unité.

13. Attelage selon la revendication 12, **caractérisé en ce que** le dispositif de commande (44a ; 44b ; 44c) présente une interface de communication (45) pour un réseau de communication (46) du véhicule tracteur (12) et/ou **en ce que** le dispositif de commande (44a ; 44b ; 44c) fait partie du dispositif de capteur (40a, 40b) ou du dispositif de freinage (65, 66 ; 68 ; 69) ou est formé par le dispositif de capteur (40a, 40b) ou par le dispositif de freinage (65, 66 ; 68 ; 69).

14. Attelage selon l'une des revendications précédentes, **caractérisé en ce que** sur la tête de boule (16a ; 16b ; 16c) ou le support de boule (15a ; 15b ; 15c) est placé au moins un contour d'engagement positif (30) pour une coopération fixe en rotation par rapport à un axe vertical (25) ayant un contre-contour d'engagement positif (60) de l'attelage de remorque (50a ; 50b), de sorte qu'un mouvement de rotation de la remorque (51) peut être transmis à la tête de boule (16a ; 16b ; 16c) ou au support de boule (15a ; 15b ; 15c), dans lequel le contour d'engagement positif (30) au nombre d'au moins un comprend de manière avantageuse au moins un logement, en particulier une rainure (31 a, 31 b), et/ou dans lequel le contour d'engagement positif (30) au nombre d'au moins un, en particulier le logement, présente de manière avantageuse au moins un biseau d'introduction (35) pour introduire le contre-contour d'engagement positif (60) lors de l'accouplement de la remorque (51), et/ou dans lequel le contour d'engagement positif (30) au nombre d'au mois un autorise de manière avantageuse un mouvement de rotation de la remorque (51) par rapport à la tête de boule (16a ; 16b ; 16c) transversalement à un plan horizontal et/ou dans lequel le contour d'engagement positif (30) au nombre d'au moins un est placé de manière avantageuse sur une face latérale verticale de la tête de boule (16a ; 16b ; 16c) et/ou dans lequel le contour d'engagement positif (30) au nombre d'au mois un présente de manière avantageuse une extension essentiellement verticale et/ou dans lequel le contour d'engagement positif (30) au nombre d'au mois un présente de manière avantageuse deux contours d'engagement positif (30) décalés en rotation l'un par rapport à l'autre part rapport à l'axe vertical (25), en particulier placés sur des faces verticales mutuellement opposées de la tête de boule (16a ; 16b ; 16c).

15. Attelage selon l'une des revendications précédentes, **caractérisé en ce que** le bras d'attelage (14a ; 14b ; 14c) est constitué d'un matériau plat de préférence cintré et/ou **en ce que** le bras d'attelage (14a ; 14b ; 14c) est monté mobile sur le véhicule tracteur (12) et/ou peut être fixé de manière amovible sur le véhicule tracteur (12).
